(19) Europäisches Patentamt / European Patent Office / Office européen des brevets

(11) **EP 4 712 559 A1**

(12) **EUROPEAN PATENT APPLICATION**
published in accordance with Art. 153(4) EPC

(43) Date of publication:
**18.03.2026 Bulletin 2026/12**

(21) Application number: **24806397.6**

(22) Date of filing: **07.05.2024**

(51) International Patent Classification (IPC):
*H04W 36/00* (2009.01)

(52) Cooperative Patent Classification (CPC):
**H04B 7/06; H04L 5/00; H04W 36/00; H04W 72/044; H04W 74/0833**

(86) International application number:
**PCT/CN2024/091305**

(87) International publication number:
**WO 2024/235041 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 CN 202310540601**

(71) Applicant: **Vivo Mobile Communication Co., Ltd.
Dongguan, Guangdong 523863 (CN)**

(72) Inventors:
• **LIN, Zhipeng
Dongguan, Guangdong 523863 (CN)**
• **WANG, Yong
Dongguan, Guangdong 523863 (CN)**

(74) Representative: **Shieldmark
P.O. Box 90471
2509 LL The Hague (NL)**

(54) **TRANSMISSION METHOD, TERMINAL, NETWORK SIDE DEVICE AND MEDIUM**

(57)    This application discloses a transmission method, a terminal, a network-side device, and a medium, and belongs to the communication field. The transmission method in embodiments of this application includes: transmitting, by a terminal, a first physical uplink shared channel PUSCH to a target cell in a random access channel-less RACH-less handover process, where there is an association relationship between a resource of the first PUSCH and a first reference signal of the target cell.

FIG. 1

**Description**

**CROSS-REFERENCE TO RELATED APPLICATIONS**

This application claims priority to Chinese Patent Application No. 202310540601.0, filed on May 12, 2023, which is incorporated herein by reference in its entirety.

**TECHNICAL FIELD**

This application belongs to the field of communication technologies, and specifically relates to a transmission method, a terminal, a network-side device, and a medium.

**BACKGROUND**

In a random access channel-less (Random Access Channel-less, RACH-less) handover process, there is no random access channel (Random Access Channel, RACH) transmission in a target cell target cell nor selection of a corresponding reference signal (synchronization signal/physical broadcast channel signal block or synchronization signal block (Synchronization Signal and PBCH block, SSB)/channel state information reference signal CSI-RS (Channel State Information Reference Signal, CSI-RS)). Because beamforming (beamforming) does not need to be considered in long term evolution (Long Term Evolution, LTE), in an RACH-less handover process in LTE, although there is no random access channel RACH transmission nor selection of a corresponding reference signal (SSB/CSI-RS), a manner of transmitting a downlink signal can still be determined. However, in new radio (New Radio, NR), beamforming (beamforming) is introduced, a downlink reference signal of data is directional. In a case that there is no RACH transmission nor selection of a corresponding reference signal in the RACH-less handover process, a manner of transmitting a downlink signal cannot be determined, resulting in reduced reliability of RACH-less communication.

**SUMMARY**

Embodiments of this application provide a transmission method, a terminal, a network-side device, and a medium, to resolve a problem of low reliability of RACH-less communication.

According to a first aspect, a transmission method is provided. The method is performed by a terminal, and includes:

transmitting, by the terminal, a first physical uplink shared channel PUSCH to a target cell in a random access channel-less RACH-less handover process, where
there is an association relationship between a resource of the first PUSCH and a first reference signal of the target cell.

According to a second aspect, a transmission method is provided. The method is performed by a terminal, and includes:

determining, by the terminal, first information related to transmission of a first physical uplink shared channel PUSCH; and
transmitting, by the terminal, the first physical uplink shared channel PUSCH to a target cell in a random access channel-less RACH-less handover process based on the first information.

According to a third aspect, a transmission method is provided. The method is performed by a first network device, and includes:

receiving, by the first network device in a random access channel-less RACH-less handover process, a first physical uplink shared channel PUSCH transmitted by a terminal, where
there is an association relationship between a resource of the first PUSCH and a first reference signal of the first network device.

According to a fourth aspect, a transmission method is provided. The method is performed by a first network device, and includes:

receiving, by the first network device in a random access channel-less RACH-less handover process based on first information, a first physical uplink shared channel PUSCH transmitted by a terminal, where

the first information is information related to transmission of the first PUSCH.

According to a fifth aspect, a terminal is provided, including:

a first transmission module, configured to transmit a first physical uplink shared channel PUSCH to a target cell in a random access channel-less RACH-less handover process, where
there is an association relationship between a resource of the first PUSCH and a first reference signal of the target cell.

According to a sixth aspect, a terminal is provided, including:

a first determining module, configured to determine first information related to transmission of a first physical uplink shared channel PUSCH; and
a second transmission module, configured to transmit the first physical uplink shared channel PUSCH to a target cell in a random access channel-less RACH-less handover process based on the first information.

According to a seventh aspect, a first network device is provided, including:

a first receiving module, configured to receive, in a random access channel-less RACH-less handover process, a first physical uplink shared channel PUSCH transmitted by a terminal, where
there is an association relationship between a resource of the first PUSCH and a first reference signal of the first network device.

According to an eighth aspect, a first network device is provided, including:

a second receiving module, configured to receive, in a random access channel-less RACH-less handover process based on first information, a first physical uplink shared channel PUSCH transmitted by a terminal, where
the first information is information related to transmission of the first PUSCH.

According to a ninth aspect, a terminal is provided. The terminal includes a processor and a memory. The memory stores a program or instructions capable of running on the processor. The program or the instructions are executed by the processor to implement the steps of the method according to the first aspect, or the program or the instructions are executed by the processor to implement the steps of the method according to the second aspect.
According to a tenth aspect, a terminal is provided, including a communication interface, where the communication interface is configured to transmit a first physical uplink shared channel PUSCH to a target cell in a random access channel-less RACH-less handover process, where
there is an association relationship between a resource of the first PUSCH and a first reference signal of the target cell.
According to an eleventh aspect, a terminal is provided, including a processor and a communication interface, where the processor is configured to determine first information related to transmission of a first physical uplink shared channel PUSCH, and the communication interface is configured to transmit the first physical uplink shared channel PUSCH to a target cell in a random access channel-less RACH-less handover process based on the first information.
According to a twelfth aspect, a network-side device is provided. The network-side device includes a processor and a memory. The memory stores a program or instructions capable of running on the processor. The program or the instructions are executed by the processor to implement the steps of the method according to the third aspect, or the program or the instructions are executed by the processor to implement the steps of the method according to the fourth aspect.
According to a thirteenth aspect, a network-side device is provided, including a communication interface, where the communication interface is configured to receive, in a random access channel-less RACH-less handover process, a first physical uplink shared channel PUSCH transmitted by a terminal, where
there is an association relationship between a resource of the first PUSCH and a first reference signal of the first network device.
According to a fourteenth aspect, a network-side device is provided, including a communication interface, where the communication interface is configured to receive, in a random access channel-less RACH-less handover process based on first information, a first physical uplink shared channel PUSCH transmitted by a terminal, where
the first information is information related to transmission of the first PUSCH.
According to a fifteenth aspect, a readable storage medium is provided. The readable storage medium stores a program or instructions. The program or the instructions are executed by a processor to implement the steps of the method according to the first aspect, or implement the steps of the method according to the second aspect, or implement the steps of the method according to the third aspect, or implement the steps of the method according to the fourth aspect.

According to a sixteenth aspect, a wireless communication system is provided, including a terminal and a first network device, where the terminal may be configured to perform the steps of the method according to the first aspect or the second aspect, and the network-side device may be configured to perform the steps of the method according to the third aspect or the fourth aspect.

According to a seventeenth aspect, a chip is provided. The chip includes a processor and a communication interface, the communication interface is coupled to the processor, and the processor is configured to run a program or instructions to implement the method according to the first aspect, or implement the method according to the second aspect, or implement the method according to the third aspect, or implement the method according to the fourth aspect.

According to an eighteenth aspect, a computer program/program product is provided, where the computer program/program product is stored in a storage medium, and the program/program product is executed by at least one processor to implement the steps of the transmission method according to the first aspect, or the program/program product is executed by at least one processor to implement the steps of the transmission method according to the second aspect, or the program/program product is executed by at least one processor to implement the steps of the transmission method according to the third aspect, or the program/program product is executed by at least one processor to implement the steps of the transmission method according to the fourth aspect.

In the embodiments of this application, the terminal transmits the first physical uplink shared channel PUSCH to the target cell in the random access channel-less RACH-less handover process, where there is an association relationship between the resource of the first PUSCH and the first reference signal of the target cell. In the embodiments of this application, the association relationship between the resource of the first PUSCH transmitted by the terminal to the target cell and the first reference signal of the target cell is established. In this way, after uplink data reception, the network can determine a reference signal or a reference signal beam that can be used in the target cell for subsequent downlink transmission, thereby improving communication reliability of RACH-less transmission.

**BRIEF DESCRIPTION OF DRAWINGS**

FIG. 1 is a flowchart of a transmission method according to an embodiment of the present invention;
FIG. 2 is a flowchart of another transmission method according to an embodiment of the present invention;
FIG. 3 is a flowchart of another transmission method according to an embodiment of the present invention;
FIG. 4 is a flowchart of another transmission method according to an embodiment of the present invention;
FIG. 5 is a schematic diagram of a communication device according to an embodiment of the present invention;
FIG. 6 is a schematic diagram of a terminal according to an embodiment of the present invention; and
FIG. 7 is a schematic diagram of a network-side device according to an embodiment of the present invention.

**DESCRIPTION OF EMBODIMENTS**

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A transmitter explicitly notifies, in a transmitted indication, a receiver of specific information, an operation that needs to be performed, a requested result, or other content. The indirect indication may be understood as: The receiver determines corresponding information based on the indication transmitted by the transmitter, or performs determining based on the indication transmitted by the transmitter, and determines, based on a determining result, the operation that needs to be performed or the requested result.

It should be noted that, a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

The wireless communication system applicable to the embodiments of this application includes a terminal and a network-side device. The terminal may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal is not limited in the embodiments of this application. The network-side device may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a Wireless Fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in the embodiments of this application, only a base station in an NR system is used as an example for description, and a specific type of the base station is not limited.

For ease of understanding, the following describes some content that may be related to the embodiments of this application.

(1) Definition of an SSB pattern in NR

In NR, to enable a terminal to perform cell search and downlink synchronization, an SSB (Synchronization Signal and PBCH block, synchronization signal/physical broadcast channel signal block or synchronization signal block) is defined, which includes a PSS (Primary Synchronization Signal, primary synchronization signal), an SSS (Secondary Synchronization Signal, secondary synchronization signal), and a PBCH (Physical Broadcast Channel, physical broadcast channel). SSB in a group carries different SSB indexes, and is transmitted within 5 ms, where a period may be 5 ms, 10 ms, 20 ms, 40 ms, 80 ms, or 160 ms. In pre-NR, for locations of all SSB within a 5 ms group, several SSB pattern cases from case A to case F are mainly defined.

A subcarrier of the SSB may be 15 kHz or 30 kHz in a frequency range 1 (Frequency range 1, FR1), and may be 120 kHz, 240 kHz, 480 kHz, or 960 kHz in FR2. For each subcarrier spacing, one or more SSB time domain pattern cases are defined. In each case, a time domain location of the SSB is determined by two parts. One part is a number of a slot group, and the other part is a number of an OFDM (Orthogonal Frequency Division Multiplexing, orthogonal frequency division multiplexing) symbol in the slot group.

(2) Non-terrestrial network (non-terrestrial network, NTN)

Satellite types considered in the NTN network are mainly GEO (Geostationary Transfer Orbit, geostationary transfer orbit), MEO (Middle Earth Orbit, middle earth orbit), LEO (Low Earth Orbit, low earth orbit/low earth orbit), depending on orbital altitude. There are two types of NTN networks based on whether a base station is on a satellite: regeneration payload (regeneration payload) and transparent payload (transparent payload). These two aspects are main factors that determine a delay in the NTN network. For a specific network delay (delay) of the GEO network and the LEO network, refer to descriptions of the related technology.

In addition, K_offset is introduced into the NTN to enhance a timing relationship.

In an initial access phase, cell-specific K_offset is used, and K_offset is indicated by using system information.

After the initial access phase, UE-specific K _offset may be indicated and updated by using a medium access control control element (Medium Access Control Control Element, MAC CE). The MAC CE provides a differential UE-specific K_offset value, and a complete UE-specific K_offset value equals the cell-specific K_offset minus the differential UE-specific K_offset.

After the initial access phase, if there is no indication and update of the K_offset, the cell-specific K_offset in the system information continues to be used to enhance all the foregoing timing relationships. A value range of the cell-specific K_offset is 0 ms to 1023 ms. A value range of the UE-specific K_offset is 0 ms to 63 ms.

A timing advance (Timing Advance, TA) applied by an NTN UE is determined by using the following formula:

$$T_{TA} = \left( N_{TA} + N_{TA,UE-specific} + N_{TA,common} + N_{TA,offset} \right) \times T_c$$

where $N_{TA}$ is indicated and updated by a TA command field in msg2/msgB or a TA command in MAC CE. For a physical random access channel (Physical Random Access Channel, PRACH), $N_{TA} = 0$.

$N_{TA,UE-specific}$ is a TA estimated and pre-compensated by the UE autonomously.

$N_{TA,common}$ is a common TA controlled and indicated by the network.

$N_{TA,offset}$ is a fixed timing offset, depending on a frequency band and LTE/NR coexistence, configured by the network or specified by the protocol.

$T_c$ is a basic time unit, and $T_c = 1/(\Delta f_{max} \cdot N_f)$, where $\Delta f_{max} = 480 \cdot 10^3$ Hz and $N_f = 4096$.

$N_{TA,UE-specific}$ is obtained by the UE through calculation based on some auxiliary information such as a UE position and an ephemeris of a serving satellite.

The NTN UE supports calculating and pre-compensating a Doppler offset on a service link (service link) at least by using the UE position and the ephemeris of the serving satellite.

The parameter related to $N_{TA,common}$ and the ephemeris of the serving satellite use a same validity duration (validity duration), which is broadcast by using system information and indicated by using 4 bits, with an optional value {5, 10, 15, 20, 25, 30, 35, 40, 45, 50, 55, 60, 120, 180, 240, 900 (for GEO)}, in seconds.

Within one validity duration, the UE assumes that the parameter related to $N_{TA,common}$ and the ephemeris of the serving satellite are valid, and are not updated.

If the parameter related to $N_{TA,common}$ and the ephemeris of the serving satellite are unavailable within one validity duration, the UE assumes that the uplink is out of synchronization.

The validity duration starts from an epoch time (epoch time) of the auxiliary information (for example, the ephemeris of the serving satellite).

When the epoch time is explicitly indicated by using system information, the epoch time is a start moment of a DL subframe, and the DL subframe is indicated by using a system frame number (SFN) and a subframe number.

When the system information does not explicitly indicate the epoch time, the epoch time may be implicitly determined by using an end moment of a system information window (SI window) for transmitting an NTN-specific SIB.

When the epoch time is indicated by using dedicated signaling (dedicated signaling), the epoch time is a start moment of a DL subframe, and the DL subframe is indicated by using a system frame number (SFN) and a subframe number.

(3) Random access channel RACH (Random Access Channel)-less handover in NR

In a RACH-less handover process, because there is no RACH (Random Access Channel, i.e. a random access channel) transmission in a target cell nor selection of a corresponding reference signal (SSB/CSI-RS) signal, the following problems need to be urgently resolved:

(1) In an RACH-less transmission process in LTE, an association between physical uplink shared channel (Physical Uplink Shared Channel, PUSCH) transmission and a downlink signal does not need to be considered. To support RACH-less PUSCH transmission in NR, because there is no RACH transmission in a target cell (a target cell for which the handover process is targeted) nor selection of a corresponding reference signal, it is important to determine a reference signal (such as an SSB/CSI-RS) or a reference signal beam (such as an SSB/CSI-RS beam).

(2) In NR, for validation (validation) of a timing advance (Timing Advance, TA), both a timer of the TA and a change in downlink associated with PUSCH transmission need to be considered. That is, determining and validation of the TA in the RACH-less transmission process are problems urgently to be resolved.

(3) In addition, in RACH-less (initial) uplink transmission (PUSCH), how to determine an available transmission occasion, a power, and a redundancy version (Redundancy Version, RV) of the PUSCH, and how to resolve a problem of a potential transmission occasion conflict with other transmission are problems urgently to be resolved.

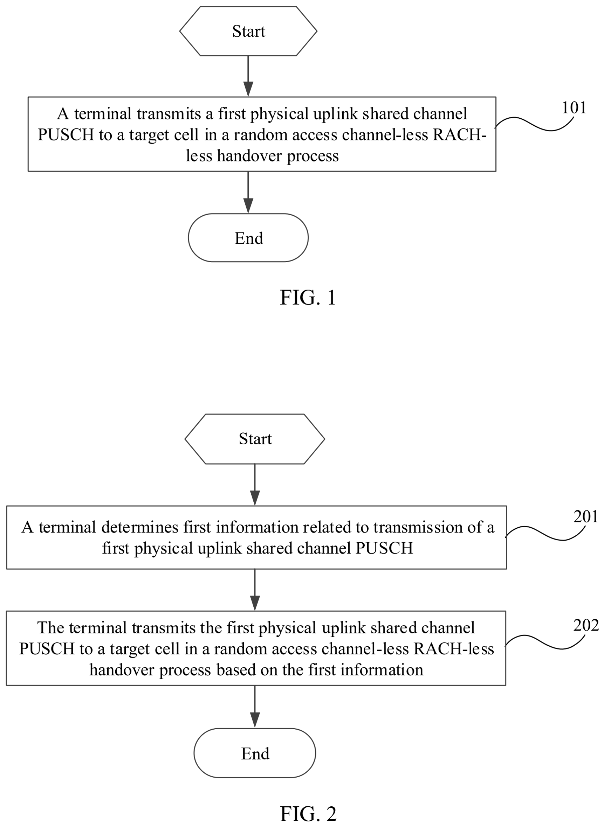

With reference to FIG. 1, the transmission method provided in the embodiments of this application is described in detail below by using some embodiments and application scenarios thereof.

Step 101. A terminal transmits a first physical uplink shared channel PUSCH to a target cell in a random access channel-less RACH-less handover process.

There is an association relationship between a resource of the first PUSCH and a first reference signal of the target cell.

In this embodiment of this application, the random access channel-less RACH-less handover process may be understood as follows: In a process in which the terminal is handed over from a source cell (which may also be described as a handover source cell, a source cell, and a second network device in this embodiment of this application) to a target cell (which may also be described as a handover target cell, a target cell, and a first network device in this embodiment of this application), in a case that there is no random access channel RACH, the terminal may transmit a PUSCH (Physical Uplink Shared Channel, physical uplink shared channel) to the target cell, thereby reducing a delay and signaling overheads.

The first PUSCH may be an initial PUSCH transmitted by the terminal to the target cell in the handover process, and the first PUSCH may be initially transmitted or retransmitted.

The resource of the first PUSCH may be at least one of the following: a time-frequency resource for transmission of the first PUSCH, a DMRS (Demodulation Reference Signal, demodulation reference signal) resource, and scrambling sequence-related information.

Optionally, the first reference signal includes at least one of the following: a first synchronization signal and PBCH block SSB and a first channel state information reference signal CSI-RS (Channel State Information Reference Signal).

Optionally, the association relationship is determined by using at least one of network configuration or protocol agreement.

In this embodiment of this application, considering that RACH-less PUSCH transmission needs to be supported in NR, because there is no RACH transmission in the target cell nor selection of a corresponding SSB/CSI-RS signal, an association between an SSB signal or a CSI/RS signal and a PUSCH resource is specifically introduced. That is, the association relationship between the resource of the first PUSCH transmitted by the terminal to the target cell and the first reference signal of the target cell is established. In this way, after uplink data reception, the network can determine which reference signal or reference signal beam (SSB/CSI-RS beam) may be used in the target cell for subsequent downlink transmission, and an uplink beam (beam) corresponding to which downlink beam (beam) is used for uplink receiving, to obtain a beamforming gain (beamforming gain).

Optionally, in this embodiment of this application, the association relationship may be determined for the PUSCH scheduled in different manners.

Scenario 1: Configured grant physical uplink shared channel (Configured Grant Physical Uplink Shared Channel, CG PUSCH)

Optionally, in a case that the first PUSCH is a configured grant physical uplink shared channel CG (configured grant) PUSCH, there is a mapping relationship between the resource of the first PUSCH and the first reference signal.

The CG PUSCH may also be described as pre-allocated grant PUSCH or a preconfigured PUSCH. Optionally, the CG PUSCH may specifically include a configured grant type 1 PUSCH (configured grant type 1 PUSCH), and may further include configured grant type 2 PUSCH (configured grant type 2 PUSCH).

The foregoing Scenario 1 may be mapping from an SSB/CSI-RS to a preconfigured PUSCH resource.

Before mapping from the signal to the preconfigured PUSCH resource is determined, a candidate SSB or CSI-RS may be determined.

Optionally, the first SSB includes at least one of the following:

a group of SSB among SSB in the target cell;
an SSB configured by a network for RACH-less handover;
an SSB that is in the target cell and that is configured by ssb-PositionsInBurst in a system information block SIB1;
an SSB that is in the target cell and that is configured by ssb-PositionsInBurst in a serving cell common configuration information element ServingCellConfigCommon Information Element;
a non-cell defining SSB that is configured in the target cell; and
an SSB that is additionally configured in the target cell and that has an additional physical cell ID.

Optionally, the group of SSB among the SSB in the target cell is configured by the network or is predetermined.

A group of SSB is selected, as the first reference signal, from SSB that has been configured in the target cell. The selection process may be configured by the network, or may be predetermined.

For example, in some embodiments, in RACH-less handover, an SSB resource used to map to a preconfigured PUSCH resource may be determined by using one or more of the following methods:

(1) A group of SSB that is among SSB in the target cell and that is configured by the network.

For example, the following signaling may be configured in a handover command (handover command):

> rachless-SSB-Subset-r18 CHOICE {
> shortBitmap-r18 BIT STRING (SIZE (4)),
> mediumBitmap-r18 BIT STRING (SIZE (8)),
> longBitmap-r18 BIT STRING (SIZE (64)) }
> For rachless-SSB-Subset, this parameter represents an SSB subset in the target cell, and the subset is used to map an SBB to a CG PUSCH in RACH-less handover CG configuration. If the parameter is not indicated, the terminal uses, as a mapping SSB set, all SSB that is actually transmitted as configured by SIB1 of the target serving cell.

With the handover command, an SBB subset is selected, as the first reference signal for mapping, from the SSB configured in the target cell.

(2) An SSB (which may be understood as a non-cell defining SSB) separately by the network for RACH-less handover.

(3) All SSB that is in the target cell and that is configured by ssb-PositionsInBurst in SIB1.

(4) All SSB that is in the target cell and that is configured by ssb-PositionsInBurst in ServingCellConfigCommon.

(5) All non-cell defining SSB that is configured in the target cell.

(6) An SSB, with an additional PCI (additional physical cell ID, different from a serving cell PCI), that is additionally configured in the target cell for inter-cell mTRP.

The handover command may be delivered by the source cell to the terminal, or may be forwarded by the target cell to the terminal by using the source cell. The non-cell defining SSB may be understood as an SSB that is not used to define a specific cell.

Optionally, the first CSI-RS includes at least one of the following:

a group of CSI-RS among CSI-RS in the target cell; and
a CSI-RS configured by the network for RACH-less handover.

Optionally, the group of CSI-RS among the CSI-RS in the target cell is configured by the network or is predetermined.

A group of CSI-RS is selected, as the first reference signal, from CSI-RS that has been configured in the target cell. The selection process may be configured by the network, or may be predetermined.

For example, in some embodiments, in RACH-less handover, a CSI-RS resource used to map to a preconfigured PUSCH resource may be determined by using one or more of the following methods:

a group of CSI-RS that is in the target cell and that is configured by the network; and
a CSI-RS resource separately by the network for RACH-less handover.

Because a CG PUSCH resource and a reference signal are generally periodically configured, to establish a mapping relationship between the CG PUSCH resource and the reference signal, an association period between the CG PUSCH resource and the reference signal needs to be determined.

Optionally, an association period between the resource of the first PUSCH and the first reference signal is determined based on at least one of the following:

a configuration period of the first PUSCH;
an association period table for a mapping relationship between a second SSB and a second CG PUSCH in configured grant based small data transmission (Configured Grant Based Small Data Transmission, CG SDT); and
an association period table defined for RACH-less handover.

In this embodiment of this application, the association period may be determined based on the configuration period of the first PUSCH, or may be determined by referring to an association period table of a mapping relationship between an SSB and a CG PUSCH in CG SDT, or may be determined by referring to an association period table specifically defined for RACH-less handover.

For example, in RACH-less handover, an association period for mapping from an SSB/CSI-RS to a preconfigured PUSCH resource may be determined by using one or more of the following methods:

depending on a PUSCH configuration period;
determined by using an association period table used for mapping from an SSB to a CG PUSCH in CG SDT;
additionally defining an association period table for mapping from an SSB to a CG PUSCH during RACH-less switchover; and
additionally defining an association period table for mapping from a channel state information reference signal (Channel State Information-Reference Signal, CSI-RS) to a CG PUSCH.

Scenario 2: DG PUSCH

Optionally, in a case that the first PUSCH is a dynamic grant physical uplink shared channel DG PUSCH, the association relationship between the resource of the first PUSCH and the first reference signal of the target cell is determined based on first downlink control information (Downlink Control Information, DCI).

The foregoing Scenario 2 may be described as determining an associated SSB/CSI-RS for the DG PUSCH.

For the DG PUSCH, the first DCI may be used to indicate a corresponding associated SSB or CSI-RS, and the first DCI may be transmitted by the target cell or the source cell to the terminal.

In some embodiments, in RACH-less handover, the network indicates, in DCI, an SSB or a CSI-RS that is associated with a DG PUSCH resource.

Optionally, a first field of the first DCI explicitly indicates the association relationship.

Alternatively, a second field of the first DCI implicitly indicates the association relationship.

In this embodiment of this application, in RACH-less handover, the network may indicate, in the DCI by using one or more of the following methods, the SSB or the CSI-RS that is associated with the DG PUSCH resource:

explicitly indicating by using a new field; and
implicitly indicating by using an existing field.

The new field or the first field may be understood as a DCI field that is specifically set to indicate the association relationship in RACH-less handover, and the existing field or the second field may be understood as a DCI field used to indicate other information.

In this embodiment of this application, the association relationship between the resource of the first PUSCH transmitted by the terminal to the target cell and the first reference signal of the target cell is established. In this way, after uplink reception, the network can determine a reference signal or a reference signal beam (SSB/CSI-RS beam) that can be used in the target cell for subsequent downlink transmission, thereby improving communication reliability of RACH-less transmission.

With reference to FIG. 2, the transmission method provided in the embodiments of this application is described in detail below by using some embodiments and application scenarios thereof.

Step 201. A terminal determines first information related to transmission of a first physical uplink shared channel PUSCH.

For the terminal and the first PUSCH in the foregoing optional implementation, refer to related descriptions in the embodiment shown in FIG. 1. To avoid repetition, details are not described again in this embodiment.

Step 202. The terminal transmits the first physical uplink shared channel PUSCH to a target cell in a random access channel-less RACH-less handover process based on the first information.

In this embodiment of the present invention, before the first PUSCH is transmitted, information related to transmission of the first PUSCH is specifically determined, to improve reliability of RACH-less transmission.

Optionally, the first information includes at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

Optionally, in a case that the first information includes the first TA for transmission of the first PUSCH, the determining, by a terminal, first information related to transmission of a first physical uplink shared channel PUSCH includes at least one of the following:

determining a value of the first TA based on TA value-related information configured by a network; and
determining a TA value of a source cell as the value of the first TA based on first indication information transmitted from the network.

The TA value-related information configured by the network includes at least one of the following:
a TA value, a common TA, a TA adjustment amount, satellite position information, a change rate of a satellite position, and a change rate of time.

The change rate of time is a TA change caused by satellite movement, and the TA adjustment amount is actively adjusted by the network.

Optionally, the TA value-related information configured by the network is indicated in any one of the following manners:

a handover command;
a physical downlink control channel (Physical Downlink Control Channel, PDCCH);
dedicated signaling of the terminal; and
a medium access control control element MAC-CE.

In this embodiment of this application, the TA information for PUSCH transmission in RACH-less handover is indicated, to the UE, by the network in the source cell, and includes one or more of the following:

(1) Absolute TA
Herein, the absolute TA is, for example, a 12-bit $N_{TA}$.

$$T_{TA} = \left(N_{TA} + N_{TA,UE-specific} + N_{TA,common} + N_{TA,offset}\right) \times T_c$$

(2) New common TA offset
The common TA offset is $N_{TA,common}$.

$$T_{TA} = \left(N_{TA} + N_{TA,UE-specific} + N_{TA,common} + N_{TA,offset}\right) \times T_c$$

(3) TA adjustment amount, which is, for example, an adjustment relative to a TA most recently used in the source cell. A TAC (Timing Advance Command, timing adjustment command) is an adjustment amount of $N_{TA}$ in the source cell, for example, a 6-bit TAC (TA command).

$$T_{TA} = \left(N_{TA} + N_{TA,UE-specific} + N_{TA,common} + N_{TA,offset}\right) \times T_c$$

(4) Satellite position information, and/or change rate of a satellite position, and/or change rate of time

For related descriptions of the parameter in the foregoing formula, refer to the foregoing descriptions.

The TA value-related information may be indicated in a handover command or a PDCCH, and may also be transmitted by using other dedicated (dedicated) signaling, such as MAC-CE.

Indicating newest TA related information by using dedicated signaling helps the UE use newest TA information in a timely manner, without waiting to receive a system information update and waiting for a time at which the updated information takes effect.

In this embodiment of this application, the TA for PUSCH transmission in RACH-less handover depends on whether the network indicates that the UE may assume that the source cell and the target cell use a same TA.

For example, the network may indicate the UE to directly use a source cell TA. In this case, the UE directly uses the source cell TA unconditionally.

For example, when the network indicates that the UE cannot directly use the source cell TA, the UE further uses the source cell TA under a specific condition by using the method in the foregoing embodiment (TAT, RSRP and a change therein, and a difference between path loss estimates).

In the foregoing embodiment, it may be understood that the terminal directly uses the source cell TA after receiving the first indication information, or the terminal further needs to determine an execution condition after receiving the first indication information, and uses the source cell TA only when a condition is met.

Optionally, the first indication information may be transmitted in the source cell, or may be transmitted in the target cell.

Optionally, the determining, by a terminal, first information related to transmission of a first physical uplink shared channel PUSCH further includes determining validity of the first TA.

The validity of the first TA may be determined after the value of the first TA is determined based on the TA value-related information configured by the network or the first indication information transmitted from the network, to further determine whether to transmit the first PUSCH by using the first TA.

Optionally, the determining validity of the first TA includes:
determining the validity of the first TA based on at least one piece of the following information:

a validity period of a timer of the first TA, where the timer starts in a case that the terminal transmits the first PUSCH to the target cell for the first time in the RACH-less handover process;
whether a change in RSRP of one or more SSB meets a first preset threshold;
whether a reference signal associated with transmission of the first PUSCH is the same as a reference signal selected in the source cell;
whether a beam associated with transmission of the first PUSCH is the same as a beam selected in the source cell;
whether a change in reference signal received quality (Reference Signal Received Quality, RSRQ) of a reference signal associated with PUSCH transmission relative to RSRQ of the reference signal selected in the source cell meets a second preset threshold;
whether a change in RSRP of the reference signal associated with PUSCH transmission relative to RSRP of the reference signal selected in the source cell meets a third preset threshold;
whether a difference between a path loss estimate of the source cell and a path loss estimate of the target cell meets a fourth preset threshold;
a position of an aerial platform corresponding to the source cell;
a position of an aerial platform corresponding to the target cell;
a position of the terminal; and
a common TA indicated by the network.

In this embodiment of this application, it may be understood that, the value of the first TA may be determined as valid in the following cases: the validity period of the timer of the first TA is valid; the change in the RSRP of the one or more SSB is less than or not greater than the first preset threshold; the reference signal associated with transmission of the first PUSCH is the same as the reference signal selected in the source cell; the beam associated with transmission of the first PUSCH is the same as the beam selected in the source cell; the change in the RSRQ of the reference signal associated with PUSCH transmission relative to the RSRQ of the reference signal selected in the source cell is less than or not greater than the second preset threshold; the change in the RSRP of the reference signal associated with PUSCH transmission relative to the RSRP of the reference signal selected in the source cell is less than or not greater than the third preset threshold; and the difference between the path loss estimate of the source cell and the path loss estimate of the target cell is less than or not greater than the fourth preset threshold.

Optionally, the path loss estimate of the source cell is estimated based on any one of the following reference signals:

a reference signal that is in the source cell and whose RSRQ or RSRP meets a fifth preset threshold; and
a reference signal that is in the source cell and that has maximum RSRQ or RSRP.

Alternatively, the path loss estimate of the target cell is based on any one of the following reference signals:

a reference signal that is in the target cell and whose RSRQ or RSRP meets a sixth preset threshold;
a reference signal that is in the target cell and that has maximum RSRQ or RSRP; and
the reference signal associated with transmission of the first PUSCH.

For example, in some embodiments, determining of the TA for PUSCH transmission in RACH-less handover may be implemented by using one or more of the following methods:

(1) introducing a TA timer to determine whether the timer expires, for example, the timer starts from the first time of transmission;

(2) whether a change in RSRP of one or more SSB exceeds a threshold;

(3) whether a selected SSB/CSI-RS beam/index associated with PUSCH transmission is the same as an SSB/CSI-RS index selected (predetermined, for example, most recently selected) at a specific time in the source cell;

(4) whether a change in RSRP (Reference Signal Received Power, reference signal received power)/RSRQ (Reference Signal Received Quality, reference signal received quality) of a selected SSB/CSI-RS associated with PUSCH transmission relative to RSRP of an SSB/CSI-RS selected (predetermined, for example, most recently selected before the RACH-less handover command is found) at a specific time in the source cell does not exceed a threshold;

(5) whether a difference between a path loss (path loss) estimate of the source cell and a path loss (path loss) estimate of the target cell does not exceed a threshold, where

optionally, the path loss estimate in the source cell may be based on an SSB or CSI-RS signal in the source cell that meets a specific condition (for example, the signal has RSRP exceeding a threshold, or has best RSRP); for the threshold herein, threshold determining may be performed after an average value is calculated; and "best" may mean "strongest"; and

optionally, the path loss estimate in the target cell may be based on an SSB or CSI-RS signal in the target cell that meets a specific condition (for example, the signal has RSRP exceeding a threshold, or has best RSRP), or a selected SSB/CSI-RS associated with a PUSCH transmission resource; and

(6) determining positions of satellites/aerial platforms in the source cell and the target cell, and/or common TA offset value information and/or a position of the UE itself.

For example, in NTN, a satellite position and a common TA offset are broadcast by the network to the UE. The UE may determine, based on the satellite position and a GNSS (Global Navigation Satellite System, global navigation satellite system) position of the UE, an RTT (Round Trip Time, round trip time) from the UE to the satellite, and determine, by using the common TA offset, an RTT from the satellite to a reference point for uplink and downlink time synchronization, to obtain an overall RTT from the UE to the reference point for uplink and downlink synchronization. Only when the overall RTT varies little in the source cell and the target cell, for example, does not exceed a threshold, the TA in the source cell can be directly used.

The foregoing embodiments of this application may be understood as TA determining and/or TA validity validation for PUSCH transmission.

Optionally, in a case that the first information includes the transmission occasion for transmission of the first PUSCH, the determining, by a terminal, first information related to transmission of a first physical uplink shared channel PUSCH includes:

determining the transmission occasion of the first PUSCH based on second indication information transmitted from a network.

Optionally, the second indication information may be transmitted in the source cell, or may be transmitted in the target cell.

Optionally, the second indication information is transmitted by using any one of the following signaling:

system information of the target cell;
system information of a source cell;
a handover command;
configured grant information of the first PUSCH; and
dynamic grant information of the first PUSCH.

In some embodiments, the method for determining a PUSCH transmission occasion during RACH-less handover in NR includes:

determining a first transmission occasion based on a second indication; and
performing, by the terminal, initial PUSCH transmission of RACH-less handover based on the first transmission occasion.

The second indication is at least one of the following:

(1) system information (source/target cell);
(2) an RACH-less HO command;

(3) a configured grant for a PUSCH of the source cell; and

(4) a dynamic grant for a PUSCH of the target cell.

Optionally, the determining, by a terminal, first information related to transmission of a first physical uplink shared channel PUSCH further includes determining validity of the transmission occasion of the first PUSCH.

The determining validity of the transmission occasion of the first PUSCH includes:

determining the validity of the transmission occasion of the first PUSCH based on at least one piece of the following information:

whether the transmission occasion of the first PUSCH overlaps a valid RACH occasion;

whether the transmission occasion of the first PUSCH is a symbol that is available for uplink transmission and that is configured by a higher layer parameter tdd-UL-DL-ConfigurationCommon or tdd-UL-DL-ConfigurationDedicated, where the symbol available for uplink transmission includes at least one of a flexible symbol flexible symbol and an uplink symbol UL symbol;

a quantity of symbols between the last symbol of transmission of a third SSB and the first symbol of the transmission occasion of the first PUSCH, where the third SSB is an SSB transmitted before the transmission occasion of the first PUSCH;

a quantity of symbols between the last symbol of first downlink transmission and the first symbol of the transmission occasion of the first PUSCH, where the first downlink transmission is downlink transmission before the transmission occasion of the first PUSCH;

a slot format indicator (Slot Format Indicator, SFI) indicated by DCI;

TA validity; and

whether overlapping occurs with other uplink transmission.

In the foregoing example of this application, it may be specifically determined, in the following cases, that the transmission occasion of the first PUSCH is valid: the transmission occasion of the first PUSCH does not overlap the valid RACH occasion; the transmission occasion of the first PUSCH is the symbol that is available for uplink transmission and that is configured by the higher layer parameter tdd-UL-DL-ConfigurationCommon or tdd-UL-DL-ConfigurationDedicated; the quantity of symbols between the last symbol of transmission of the third SSB and the first symbol of the transmission occasion of the first PUSCH is greater than or not less than a threshold; the quantity of symbols between the last symbol of the first downlink transmission and the first symbol of the transmission occasion of the first PUSCH is greater than or not less than a threshold; the slot format indicator SFI indicated by the DCI does not indicate the flexible symbol as a DL symbol; TA validity is determined; and no overlapping occurs with other uplink transmission.

For example, the first transmission occasion is a PUSCH transmission occasion that is scheduled by using a configured grant or a dynamic grant and that meets validity, and the validity is determined by using at least one of the following:

(1) whether the PUSCH transmission occasion overlaps a valid RACH occasion (including an RO for PRACH repetition), and if the PUSCH transmission occasion does not overlap the valid RACH occasion, the PUSCH transmission occasion is valid;

(2) the PUSCH transmission occasion is a symbol that is available for uplink transmission and that is configured by the higher layer parameter tdd-UL-DL-ConfigurationCommon and/or tdd-UL-DL-ConfigurationDedicated, where the symbol available for uplink transmission includes a flexible symbol and/or a UL symbol;

(3) if there is SSB transmission before the PUSCH transmission occasion, and there are at least N symbols between the last symbol of the SSB transmission and the first symbol of the PUSCH transmission occasion, the PUSCH transmission occasion is valid, where the SSB transmission is an SSB indicated by a higher layer parameter ssb-PositionsInBurst in SIB1 or ServingCellConfigCommon or an SSB, with an additional PCI (additional physical cell ID, different from a serving cell PCI) for inter-cell mTRP;

(4) if there is downlink transmission before the PUSCH transmission occasion, and there are at least N symbols between the last symbol of the downlink transmission and the first symbol of the PUSCH transmission occasion, the PUSCH transmission occasion is valid;

(5) if the SFI (slot format indicator, slot format indicator) indicated by the DCI, for example, indicates the flexible symbol as a DL symbol, and the PUSCH transmission occasion overlaps the flexible symbol, the PUSCH transmission occasion is invalid;

(6) for TA validity, for example, if a TA is invalid during the PUSCH transmission occasion, it is considered that the current PUSCH transmission occasion is invalid; and

(7) whether overlapping occurs with other uplink transmission (a PUCCH and a sounding reference signal (Sounding Reference Signal, SRS)).

The foregoing embodiment of this application may be understood as determining the PUSCH transmission occasion and validating validity of the PUSCH transmission occasion.

Optionally, in a case that the first information includes the power control related information for transmission of the first PUSCH, the determining, by a terminal, first information related to transmission of a first physical uplink shared channel PUSCH includes:

> determining a path loss estimate in the target cell; and
> determining an initial rated power of the first PUSCH of the terminal.

The initial rated power may be $P_{O\_NOMINAL,PUSCH,f,c}(0)$.

Optionally, a reference signal used to determine the path loss estimate in the target cell includes at least one of the following:

> a reference signal associated with the first PUSCH;
> a second reference signal in a source cell;
> a reference signal indicated by a PDCCH that dynamically schedules a PUSCH; and
> a reference signal indicated by a RACH-less handover command.

Optionally, the second reference signal includes at least one of the following:

> a reference signal most recently selected by the terminal in the source cell;
> a reference signal associated with a first PDCCH received by the terminal in the source cell, where the first PDCCH is used to schedule a RACH-less PUSCH; and
> a reference signal associated with a handover command received by the terminal in the source cell.

It may be understood that the PDCCH that schedules the RACH-less PUSCH is transmitted in the source cell, and the PDCCH that schedules the RACH-less PUSCH may alternatively be transmitted in the target cell.

For example, the path loss used for calculating a power of the PUSCH in RACH-less handover is determined by using one or more of the following methods:

> (1) the path loss reference signal is an SSB or a CSI-RS that is mapped to a preconfigured PUSCH resource;
> (2) the path loss reference signal is an SSB or a CSI-RS in the source cell, where the SSB/CSI-RS herein may be one or more of the following:

>> an SSB or a CSI-RS most recently selected (which may also be described as "most recently assumed") by the UE in the source cell;
>> an SSB or a CSI-RS that is associated with the PDCCH that schedules the RACH-less PUSCH and that is received by the UE in the source cell; and
>> an SSB or a CSI-RS that is associated with the handover command received by the UE in the source cell;

> (3) the path loss reference signal is indicated by the PDCCH that dynamically schedules the PUSCH; and
> (4) the path loss reference signal is indicated by the RACH-less handover command.

Optionally, the determining an initial rated power of the first PUSCH of the terminal includes determining the initial rated power of the first PUSCH of the terminal based on at least one piece of the following information:

> a target PRACH received power defined by the target cell;
> a target PUSCH received power defined by the target cell;
> a target PRACH received power defined by a source cell;
> a target PUSCH received power defined by the source cell;
> an initial rated power, of the first PUSCH, that is indicated by a handover command and that is used for RACH-less handover; and
> an initial rated power, of the first PUSCH, that is indicated by DCI scheduling initial PUSCH transmission and that is used for RACH-less handover.

Different cells separately define the target PRACH received power as the received power of the PRACH, and define the target PUSCH received power as the received power of the PUSCH. The terminal may directly use the defined power as the initial rated power, or the network may additionally define, in the handover command or the DCI, a power for RACH-less handover as the initial rated power of the first PUSCH.

Optionally, in a case that the first information includes the redundancy version RV for transmission of the first PUSCH, the determining, by a terminal, first information related to transmission of a first physical uplink shared channel PUSCH includes:

determining the redundancy version RV for transmission of the first PUSCH as a fixed value.

In some embodiments, the RV for initial transmission or automatic retransmission of the initial transmission of the PUSCH in RACH-less handover is a fixed value, such as 0 or 3. The PUSCH herein may be a CG PUSCH.

In this embodiment of the present invention, before the first PUSCH is transmitted, information related to transmission of the first PUSCH is specifically determined, to improve reliability of RACH-less transmission.

It may be understood that, in the embodiment shown in FIG. 2 of this application, the association relationship in the embodiment shown in FIG. 1 may be applied. In a process of transmitting the first PUSCH in the embodiment shown in FIG. 1, transmission may also be performed based on the first information in the example shown in FIG. 2.

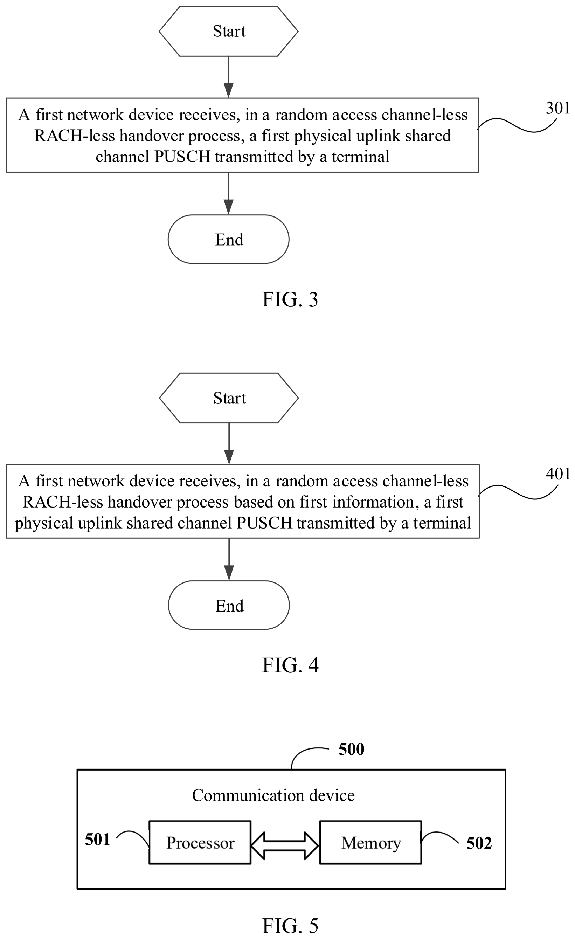

With reference to FIG. 3, the transmission method provided in the embodiments of this application is described in detail below by using some embodiments and application scenarios thereof.

Step 301. A first network device receives, in a random access channel-less RACH-less handover process, a first physical uplink shared channel PUSCH transmitted by a terminal.

There is an association relationship between a resource of the first PUSCH and a first reference signal of the first network device.

In this embodiment of this application, the first network device may be a network device corresponding to a target cell in the RACH-less handover process.

Optionally, in a case that the first PUSCH is a configured grant physical uplink shared channel CG PUSCH, there is a mapping relationship between the resource of the first PUSCH and the first reference signal.

Optionally, the first reference signal includes at least one of the following: a first synchronization signal and PBCH block SSB and a first channel state information reference signal CSI-RS.

The first SSB includes at least one of the following:

a group of SSB among SSB in the first network device;
an SSB configured by a network for RACH-less handover;
an SSB that is of the first network device and that is configured by ssb-PositionsInBurst in a system information block SIB1;
an SSB that is of the first network device and that is configured by ssb-PositionsInBurst in a serving cell common configuration information element ServingCellConfigCommon Information Element;
a non-cell defining SSB that is configured in the first network device; and
an SSB that is additionally configured in the first network device and that has an additional physical cell ID.

Alternatively, the first CSI-RS includes at least one of the following:

a group of CSI-RS among CSI-RS in the first network device; and
a CSI-RS configured by a network for RACH-less handover.

Optionally, the group of SSB among the SSB in the first network device is configured by the network or is predetermined, or the group of CSI-RS among the CSI-RS in the first network device is configured by the network or is predetermined.

Optionally, an association period between the resource of the first PUSCH and the first reference signal is determined based on at least one of the following:

a configuration period of the first PUSCH;
an association period table for a mapping relationship between a second SSB and a second CG PUSCH in configured grant based small data transmission CG SDT; and
an association period table defined for RACH-less handover.

Optionally, in a case that the first PUSCH is a dynamic grant physical uplink shared channel DG PUSCH, the association relationship between the resource of the first PUSCH and the first reference signal of the first network device is determined based on first downlink control information DCI.

Optionally, a first field of the first DCI explicitly indicates the association relationship.

Alternatively, a second field of the first DCI implicitly indicates the association relationship.

Optionally, the first reference signal includes at least one of the following: a first synchronization signal and PBCH block SSB and a first channel state information reference signal CSI-RS.

Optionally, the association relationship is determined by using at least one of network configuration or protocol agreement.

Optionally, the receiving, by a first network device in a random access channel-less RACH-less handover process, a first physical uplink shared channel PUSCH transmitted by a terminal includes:

receiving, by the first network device in the random access channel-less RACH-less handover process based on first information, the first physical uplink shared channel PUSCH transmitted by the terminal.

The first information is information related to transmission of the first PUSCH.

Optionally, the first information includes at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

It should be noted that, the transmission method provided in this embodiment of the present invention may be used to execute the network-side execution manner corresponding to the embodiment shown in FIG. 1. Therefore, all implementations in the embodiment of the transmission method described in the embodiment shown in FIG. 1 are applicable to the transmission method provided in this embodiment of the present invention, and same or similar beneficial effects can be achieved. To avoid repetition, details are not described again in this embodiment.

With reference to FIG. 4, the transmission method provided in the embodiments of this application is described in detail below by using some embodiments and application scenarios thereof.

Step 401. A first network device receives, in a random access channel-less RACH-less handover process based on first information, a first physical uplink shared channel PUSCH transmitted by a terminal.

The first information is information related to transmission of the first PUSCH.

Optionally, the first information includes at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

Optionally, in a case that the first information includes the first TA for transmission of the first PUSCH, before the receiving a first physical uplink shared channel PUSCH transmitted by a terminal, the method further includes at least one of the following:

transmitting, by the first network device, TA value-related information to the terminal, where a value of the first TA is determined based on the TA value-related information; and
transmitting, by the first network device, first indication information to the terminal, where the first indication information indicates the terminal to determine a TA value of a source cell as the value of the first TA.

Optionally, the TA value-related information includes at least one of the following:
a TA value, a common TA, a TA adjustment amount, satellite position information, a change rate of a satellite position, and a change rate of time.

Optionally, the TA value-related information is indicated in any one of the following manners:

a handover command;
a physical downlink control channel PDCCH;
dedicated signaling of the terminal; and
a medium access control control element MAC-CE.

Optionally, validity of the first TA is determined based on at least one piece of the following information:

a validity period of a timer of the first TA, where the timer starts in a case that the terminal transmits the first PUSCH to the target cell for the first time in the RACH-less handover process;
whether a change in RSRP of one or more SSB meets a first preset threshold;
whether a reference signal associated with transmission of the first PUSCH is the same as a reference signal selected in the source cell;
whether a beam associated with transmission of the first PUSCH is the same as a beam selected in the source cell;

whether a change in RSRQ of a reference signal associated with PUSCH transmission relative to RSRQ of the reference signal selected in the source cell meets a second preset threshold;

whether a change in RSRP of the reference signal associated with PUSCH transmission relative to RSRP of the reference signal selected in the source cell meets a third preset threshold;

whether a difference between a path loss estimate of the source cell and a path loss estimate of the target cell meets a fourth preset threshold;

a position of an aerial platform corresponding to the source cell;

a position of an aerial platform corresponding to the target cell;

a position of the terminal; and

a common TA indicated by the network.

Optionally, in a case that the first information includes the transmission occasion for transmission of the first PUSCH, before the receiving a first physical uplink shared channel PUSCH transmitted by a terminal, the method further includes:

transmitting, by the first network device, second indication information to the terminal, where the second indication information is used to determine a transmission occasion of the first PUSCH.

Optionally, the transmission occasion for transmission of the first PUSCH is determined based on second indication information, and the second indication information is transmitted by using any one of the following signaling:

system information of the first network device;

system information of a source cell;

a handover command;

configured grant information of the first PUSCH; and

dynamic grant information of the first PUSCH.

Optionally, validity of the transmission occasion of the first PUSCH is determined based on at least one piece of the following information:

whether the transmission occasion of the first PUSCH overlaps a valid RACH occasion;

whether the transmission occasion of the first PUSCH is a symbol that is available for uplink transmission and that is configured by a higher layer parameter tdd-UL-DL-ConfigurationCommon or tdd-UL-DL-ConfigurationDedicated, where the symbol available for uplink transmission includes at least one of a flexible symbol flexible symbol and an uplink symbol UL symbol;

a quantity of symbols between the last symbol of transmission of a third SSB and the first symbol of the transmission occasion of the first PUSCH, where the third SSB is an SSB transmitted before the transmission occasion of the first PUSCH;

a quantity of symbols between the last symbol of first downlink transmission and the first symbol of the transmission occasion of the first PUSCH, where the first downlink transmission is downlink transmission before the transmission occasion of the first PUSCH;

a slot format indicator SFI indicated by DCI;

TA validity; and

whether overlapping occurs with other uplink transmission.

Optionally, the power control related information for transmission of the first PUSCH includes an initial rated power of the first PUSCH of the terminal.

The initial rated power of the first PUSCH of the terminal is determined based on at least one piece of the following information:

a target PRACH received power defined by the first network device;

a target PUSCH received power defined by the first network device;

a target PRACH received power defined by a source cell;

a target PUSCH received power defined by the source cell;

an initial rated power, of the first PUSCH, that is indicated by a handover command and that is used for RACH-less handover; and

an initial rated power, of the first PUSCH, that is indicated by DCI scheduling initial PUSCH transmission and that is used for RACH-less handover.

Optionally, the redundancy version RV for transmission of the first PUSCH is determined as a fixed value.

It should be noted that, the transmission method provided in this embodiment of the present invention may be used to execute the network-side execution manner corresponding to the embodiment shown in FIG. 2. Therefore, all implementations in the embodiment of the transmission method described in the embodiment shown in FIG. 2 are applicable to the transmission method provided in this embodiment of the present invention, and same or similar beneficial effects can be achieved. To avoid repetition, details are not described again in this embodiment.

It may be understood that, in the embodiment shown in FIG. 4 of this application, the association relationship in the embodiment shown in FIG. 3 may be applied. In a process of transmitting the first PUSCH in the embodiment shown in FIG. 3, transmission may also be performed based on the first information in the example shown in FIG. 4.

The transmission method provided in the embodiment in FIG. 1 of this application may be performed by a terminal. In the embodiments of this application, an example in which the terminal performs the transmission method is used to describe the terminal provided in the embodiments of this application.

A first transmission module is configured to transmit a first physical uplink shared channel PUSCH to a target cell in a random access channel-less RACH-less handover process.

There is an association relationship between a resource of the first PUSCH and a first reference signal of the target cell.

Optionally, in a case that the first PUSCH is a configured grant physical uplink shared channel CG PUSCH, there is a mapping relationship between the resource of the first PUSCH and the first reference signal.

Optionally, the first reference signal includes at least one of the following: a first synchronization signal and PBCH block SSB and a first channel state information reference signal CSI-RS.

The first SSB includes at least one of the following:

a group of SSB among SSB in the target cell;
an SSB configured by a network for RACH-less handover;
an SSB that is in the target cell and that is configured by ssb-PositionsInBurst in a system information block SIB1;
an SSB that is in the target cell and that is configured by ssb-PositionsInBurst in a serving cell common configuration information element ServingCellConfigCommon Information Element;
a non-cell defining SSB that is configured in the target cell; and
an SSB that is additionally configured in the target cell and that has an additional physical cell ID.

Alternatively, the first CSI-RS includes at least one of the following:

a group of CSI-RS among CSI-RS in the target cell; and
a CSI-RS configured by a network for RACH-less handover.

The group of SSB among the SSB in the target cell is configured by the network or is predetermined, or the group of CSI-RS among the CSI-RS in the target cell is configured by the network or is predetermined.

Optionally, an association period between the resource of the first PUSCH and the first reference signal is determined based on at least one of the following:

a configuration period of the first PUSCH;
an association period table for a mapping relationship between a second SSB and a second CG PUSCH in configured grant based small data transmission CG SDT; and
an association period table defined for RACH-less handover.

Optionally, in a case that the first PUSCH is a dynamic grant physical uplink shared channel DG PUSCH, the association relationship between the resource of the first PUSCH and the first reference signal of the target cell is determined based on first downlink control information DCI.

Optionally, a first field of the first DCI explicitly indicates the association relationship, or a second field of the first DCI implicitly indicates the association relationship.

Optionally, the first reference signal includes at least one of the following: a first synchronization signal and PBCH block SSB and a first channel state information reference signal CSI-RS.

Optionally, the association relationship is determined by using at least one of network configuration or protocol agreement.

The terminal further includes:

a second determining module, configured to determine first information related to transmission of the first PUSCH.

The first transmission module includes:

a first transmission submodule, configured to transmit the first PUSCH to the target cell in the random access channel-less RACH-less handover process based on the first information.

Optionally, the first information includes at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

It should be noted that the terminal provided in this embodiment of the present invention is an apparatus that can perform the transmission method in the embodiment shown in FIG. 1. Therefore, all implementations of the transmission method in the embodiment shown in FIG. 1 are applicable to the terminal, and same or similar beneficial effects can be achieved. To avoid repetition, details are not described again in this embodiment.

The terminal in this embodiment of this application may be an electronic device, for example, an electronic device with an operating system, or may be a component such as an integrated circuit or a chip in the electronic device. The electronic device may be a terminal, or may be another device other than the terminal. For example, the terminal may include but is not limited to the foregoing listed types of the terminal. The another device may be a server, a network attached storage (Network Attached Storage, NAS), or the like. This is not specifically limited in this embodiment of this application.

The transmission method provided in the embodiment in FIG. 2 of this application may be performed by a terminal. In the embodiments of this application, an example in which the terminal performs the transmission method is used to describe the terminal provided in the embodiments of this application.

A first determining module is configured to determine first information related to transmission of a first physical uplink shared channel PUSCH.

A second transmission module is configured to transmit the first physical uplink shared channel PUSCH to a target cell in a random access channel-less RACH-less handover process based on the first information.

Optionally, the first information includes at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

Optionally, in a case that the first information includes the first TA for transmission of the first PUSCH, the first determining module includes at least one of the following:

a first determining submodule, configured to determine a value of the first TA based on TA value-related information configured by a network; and
a second determining submodule, configured to determine a TA value of a source cell as the value of the first TA based on first indication information transmitted from the network.

Optionally, the TA value-related information configured by the network includes at least one of the following:
a TA value, a common TA, a TA adjustment amount, satellite position information, a change rate of a satellite position, and a change rate of time.

Optionally, the TA value-related information configured by the network is indicated in any one of the following manners:

a handover command;
a physical downlink control channel PDCCH;
dedicated signaling of the terminal; and
a medium access control control element MAC-CE.

Optionally, the first determining module further includes:
a third determining submodule, configured to determine validity of the first TA.

Optionally, the third determining submodule is configured to determine the validity of the first TA based on at least one piece of the following information:

a validity period of a timer of the first TA, where the timer starts in a case that the terminal transmits the first PUSCH to the target cell for the first time in the RACH-less handover process;
whether a change in RSRP of one or more SSB meets a first preset threshold;

whether a reference signal associated with transmission of the first PUSCH is the same as a reference signal selected in the source cell;

whether a beam associated with transmission of the first PUSCH is the same as a beam selected in the source cell;

whether a change in RSRQ of a reference signal associated with PUSCH transmission relative to RSRQ of the reference signal selected in the source cell meets a second preset threshold;

whether a change in RSRP of the reference signal associated with PUSCH transmission relative to RSRP of the reference signal selected in the source cell meets a third preset threshold;

whether a difference between a path loss estimate of the source cell and a path loss estimate of the target cell meets a fourth preset threshold;

a position of an aerial platform corresponding to the source cell;

a position of an aerial platform corresponding to the target cell;

a position of the terminal; and

a common TA indicated by the network.

Optionally, the path loss estimate of the source cell is estimated based on any one of the following reference signals:

a reference signal that is in the source cell and whose RSRQ or RSRP meets a fifth preset threshold; and

a reference signal that is in the source cell and that has maximum RSRQ or RSRP; or

the path loss estimate of the target cell is based on any one of the following reference signals:

a reference signal that is in the target cell and whose RSRQ or RSRP meets a sixth preset threshold;

a reference signal that is in the target cell and that has maximum RSRQ or RSRP; and

the reference signal associated with transmission of the first PUSCH.

Optionally, in a case that the first information includes the transmission occasion for transmission of the first PUSCH, the first determining module includes:

a fourth determining submodule, configured to determine the transmission occasion of the first PUSCH based on second indication information transmitted from a network.

Optionally, the second indication information is transmitted by using any one of the following signaling:

system information of the target cell;

system information of a source cell;

a handover command;

configured grant information of the first PUSCH; and

dynamic grant information of the first PUSCH.

Optionally, the first determining module further includes:

a fifth determining submodule, configured to determine validity of the transmission occasion of the first PUSCH.

Optionally, the fifth determining submodule is configured to determine the validity of the transmission occasion of the first PUSCH based on at least one piece of the following information:

whether the transmission occasion of the first PUSCH overlaps a valid RACH occasion;

whether the transmission occasion of the first PUSCH is a symbol that is available for uplink transmission and that is configured by a higher layer parameter tdd-UL-DL-ConfigurationCommon or tdd-UL-DL-ConfigurationDedicated, where the symbol available for uplink transmission includes at least one of a flexible symbol flexible symbol and an uplink symbol UL symbol;

a quantity of symbols between the last symbol of transmission of a third SSB and the first symbol of the transmission occasion of the first PUSCH, where the third SSB is an SSB transmitted before the transmission occasion of the first PUSCH;

a quantity of symbols between the last symbol of first downlink transmission and the first symbol of the transmission occasion of the first PUSCH, where the first downlink transmission is downlink transmission before the transmission occasion of the first PUSCH;

a slot format indicator SFI indicated by DCI;

TA validity; and

whether overlapping occurs with other uplink transmission.

Optionally, in a case that the first information includes the power control related information for transmission of the first PUSCH, the first determining module includes:

a sixth determining submodule, configured to determine a path loss estimate in the target cell; and
a seventh determining submodule, configured to determine an initial rated power of the first PUSCH of the terminal.

Optionally, a reference signal used to determine the path loss estimate in the target cell includes at least one of the following:

a reference signal associated with the first PUSCH;
a second reference signal in a source cell;
a reference signal indicated by a PDCCH that dynamically schedules a PUSCH; and
a reference signal indicated by a RACH-less handover command.

Optionally, the second reference signal includes at least one of the following:

a reference signal most recently selected by the terminal in the source cell;
a reference signal associated with a first PDCCH received by the terminal in the source cell, where the first PDCCH is used to schedule a RACH-less PUSCH; and
a reference signal associated with a handover command received by the terminal in the source cell.

Optionally, the seventh determining submodule is configured to determine the initial rated power of the first PUSCH of the terminal based on at least one piece of the following information:

a target PRACH received power defined by the target cell;
a target PUSCH received power defined by the target cell;
a target PRACH received power defined by a source cell;
a target PUSCH received power defined by the source cell;
an initial rated power, of the first PUSCH, that is indicated by a handover command and that is used for RACH-less handover; and
an initial rated power, of the first PUSCH, that is indicated by DCI scheduling initial PUSCH transmission and that is used for RACH-less handover.

Optionally, in a case that the first information includes the redundancy version RV for transmission of the first PUSCH, the first determining module includes:
an eighth determining submodule, configured to determine the redundancy version RV for transmission of the first PUSCH as a fixed value.

The terminal in this embodiment of this application may be an electronic device, for example, an electronic device with an operating system, or may be a component such as an integrated circuit or a chip in the electronic device. The electronic device may be a terminal, or may be another device other than the terminal. For example, the terminal may include but is not limited to the foregoing listed types of the terminal. The another device may be a server, a network attached storage (Network Attached Storage, NAS), or the like. This is not specifically limited in this embodiment of this application.

It should be noted that the terminal provided in this embodiment of the present invention is an apparatus that can perform the transmission method in the embodiment shown in FIG. 2. Therefore, all implementations of the transmission method in the embodiment shown in FIG. 2 are applicable to the terminal, and same or similar beneficial effects can be achieved. To avoid repetition, details are not described again in this embodiment.

The transmission method provided in the embodiment in FIG. 3 of this application may be performed by a first network device. In the embodiments of this application, an example in which the first network device performs the transmission method is used to describe the first network device provided in the embodiments of this application.

A first receiving module is configured to receive, in a random access channel-less RACH-less handover process, a first physical uplink shared channel PUSCH transmitted by a terminal.

There is an association relationship between a resource of the first PUSCH and a first reference signal of the first network device.

Optionally, in a case that the first PUSCH is a configured grant physical uplink shared channel CG PUSCH, there is a mapping relationship between the resource of the first PUSCH and the first reference signal.

Optionally, the first reference signal includes at least one of the following: a first synchronization signal and PBCH block SSB and a first channel state information reference signal CSI-RS.

The first SSB includes at least one of the following:

a group of SSB among SSB in the first network device;

an SSB configured by a network for RACH-less handover;

an SSB that is of the first network device and that is configured by ssb-PositionsInBurst in a system information block SIB1;

an SSB that is of the first network device and that is configured by ssb-PositionsInBurst in a serving cell common configuration information element ServingCellConfigCommon Information Element;

a non-cell defining SSB that is configured in the first network device; and

an SSB that is additionally configured in the first network device and that has an additional physical cell ID.

Alternatively, the first CSI-RS includes at least one of the following:

a group of CSI-RS among CSI-RS in the first network device; and

a CSI-RS configured by a network for RACH-less handover.

Optionally, the group of SSB among the SSB in the first network device is configured by the network or is predetermined, or the group of CSI-RS among the CSI-RS in the first network device is configured by the network or is predetermined.

Optionally, an association period between the resource of the first PUSCH and the first reference signal is determined based on at least one of the following:

a configuration period of the first PUSCH;

an association period table for a mapping relationship between a second SSB and a second CG PUSCH in configured grant based small data transmission CG SDT; and

an association period table defined for RACH-less handover.

Optionally, in a case that the first PUSCH is a dynamic grant physical uplink shared channel DG PUSCH, the association relationship between the resource of the first PUSCH and the first reference signal of the first network device is determined based on first downlink control information DCI.

Optionally, a first field of the first DCI explicitly indicates the association relationship.

Alternatively, a second field of the first DCI implicitly indicates the association relationship.

Optionally, the first reference signal includes at least one of the following: a first synchronization signal and PBCH block SSB and a first channel state information reference signal CSI-RS.

Optionally, the association relationship is determined by using at least one of network configuration or protocol agreement.

Optionally, the first receiving module includes:

a first receiving submodule, configured to receive, in the random access channel-less RACH-less handover process based on first information, the first physical uplink shared channel PUSCH transmitted by the terminal.

The first information is information related to transmission of the first PUSCH.

Optionally, the first information includes at least one of the following:

a first timing advance TA for transmission of the first PUSCH;

a transmission occasion for transmission of the first PUSCH;

power control related information for transmission of the first PUSCH; and

a redundancy version RV for transmission of the first PUSCH.

It should be noted that the first network device provided in this embodiment of the present invention is an apparatus that can perform the foregoing transmission method in the embodiment shown in FIG. 3. Therefore, all implementations of the transmission method in the embodiment shown in FIG. 3 are applicable to the first network device, and same or similar beneficial effects can be achieved. To avoid repetition, details are not described again in this embodiment.

The transmission method provided in the embodiment in FIG. 4 of this application may be performed by a first network device. In the embodiments of this application, an example in which the terminal performs the transmission method is used to describe the first network device provided in the embodiments of this application.

A second receiving module is configured to receive, in a random access channel-less RACH-less handover process based on first information, a first physical uplink shared channel PUSCH transmitted by a terminal.

The first information is information related to transmission of the first PUSCH.

Optionally, the first information includes at least one of the following:

a first timing advance TA for transmission of the first PUSCH;

a transmission occasion for transmission of the first PUSCH;

power control related information for transmission of the first PUSCH; and

a redundancy version RV for transmission of the first PUSCH.

Optionally, in a case that the first information includes the first TA for transmission of the first PUSCH, the first network device further includes:

a third transmission module, configured to transmit TA value-related information to the terminal, where a value of the first TA is determined based on the TA value-related information; and

a fourth transmission module, configured to transmit first indication information to the terminal, where the first indication information indicates the terminal to determine a TA value of a source cell as the value of the first TA.

Optionally, the TA value-related information includes at least one of the following:

a TA value, a common TA, a TA adjustment amount, satellite position information, a change rate of a satellite position, and a change rate of time.

Optionally, the TA value-related information is indicated in any one of the following manners:

a handover command;

a physical downlink control channel PDCCH;

dedicated signaling of the terminal; and

a medium access control control element MAC-CE.

Optionally, validity of the first TA is determined based on at least one piece of the following information:

a validity period of a timer of the first TA, where the timer starts in a case that the terminal transmits the first PUSCH to the target cell for the first time in the RACH-less handover process;

whether a change in RSRP of one or more SSB meets a first preset threshold;

whether a reference signal associated with transmission of the first PUSCH is the same as a reference signal selected in the source cell;

whether a beam associated with transmission of the first PUSCH is the same as a beam selected in the source cell;

whether a change in RSRQ of a reference signal associated with PUSCH transmission relative to RSRQ of the reference signal selected in the source cell meets a second preset threshold;

whether a change in RSRP of the reference signal associated with PUSCH transmission relative to RSRP of the reference signal selected in the source cell meets a third preset threshold;

whether a difference between a path loss estimate of the source cell and a path loss estimate of the target cell meets a fourth preset threshold;

a position of an aerial platform corresponding to the source cell;

a position of an aerial platform corresponding to the target cell;

a position of the terminal; and

a common TA indicated by a network.

Optionally, in a case that the first information includes the transmission occasion for transmission of the first PUSCH, the first network device further includes:

a fifth transmission module, configured to transmit second indication information to the terminal, where the second indication information is used to determine a transmission occasion of the first PUSCH.

Optionally, the transmission occasion for transmission of the first PUSCH is determined based on second indication information, and the second indication information is transmitted by using any one of the following signaling:

system information of the first network device;

system information of a source cell;

a handover command;

configured grant information of the first PUSCH; and

dynamic grant information of the first PUSCH.

Optionally, validity of the transmission occasion of the first PUSCH is determined based on at least one piece of the following information:

whether the transmission occasion of the first PUSCH overlaps a valid RACH occasion;

whether the transmission occasion of the first PUSCH is a symbol that is available for uplink transmission and that is configured by a higher layer parameter tdd-UL-DL-ConfigurationCommon or tdd-UL-DL-ConfigurationDedicated, where the symbol available for uplink transmission includes at least one of a flexible symbol flexible symbol and an uplink symbol UL symbol;

a quantity of symbols between the last symbol of transmission of a third SSB and the first symbol of the transmission occasion of the first PUSCH, where the third SSB is an SSB transmitted before the transmission occasion of the first PUSCH;

a quantity of symbols between the last symbol of first downlink transmission and the first symbol of the transmission occasion of the first PUSCH, where the first downlink transmission is downlink transmission before the transmission occasion of the first PUSCH;

a slot format indicator SFI indicated by DCI;

TA validity; and

whether overlapping occurs with other uplink transmission.

Optionally, the power control related information for transmission of the first PUSCH includes an initial rated power of the first PUSCH of the terminal.

The initial rated power of the first PUSCH of the terminal is determined based on at least one piece of the following information:

a target PRACH received power defined by the first network device;

a target PUSCH received power defined by the first network device;

a target PRACH received power defined by a source cell;

a target PUSCH received power defined by the source cell;

an initial rated power, of the first PUSCH, that is indicated by a handover command and that is used for RACH-less handover; and

an initial rated power, of the first PUSCH, that is indicated by DCI scheduling initial PUSCH transmission and that is used for RACH-less handover.

Optionally, the redundancy version RV for transmission of the first PUSCH is determined as a fixed value.

It should be noted that the first network device provided in this embodiment of the present invention is an apparatus that can perform the transmission method in the embodiment shown in FIG. 4. Therefore, all implementations of the transmission method in the embodiment shown in FIG. 4 are applicable to the first network device, and same or similar beneficial effects can be achieved. To avoid repetition, details are not described again in this embodiment.

Optionally, as shown in FIG. 5, an embodiment of this application further provides a communication device 500, including a processor 501 and a memory 502. The memory 502 stores a program or instructions capable of running on the processor 501. For example, when the communication device 500 is a terminal, the program or the instructions are executed by the processor 501 to implement the steps in the foregoing method embodiment shown in FIG. 1 or FIG. 2, and same technical effects can be achieved. When the communication device 500 is a network-side device, the program or the instructions are executed by the processor 501 to implement the steps in the foregoing method embodiment shown in FIG. 3 or FIG. 4, and same technical effects can be achieved. To avoid repetition, details are not described herein again.

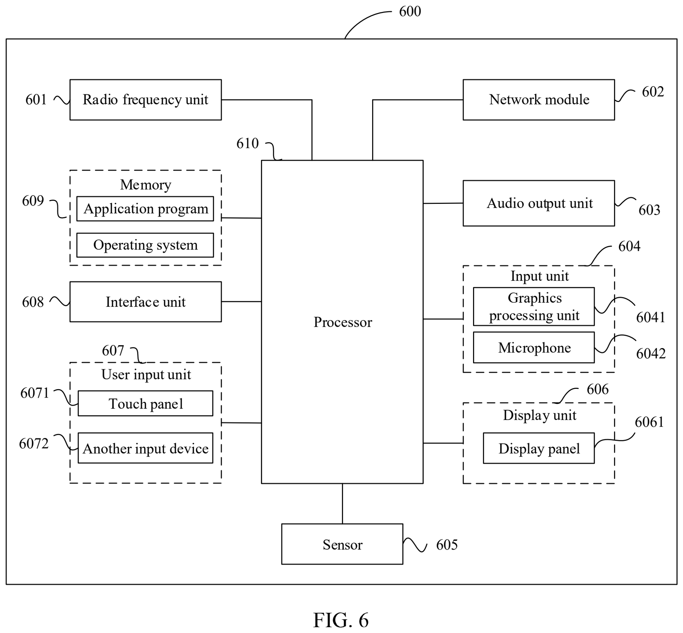

An embodiment of this application further provides a terminal, including a processor and a communication interface. The communication interface is coupled to the processor. The processor is configured to run a program or instructions to implement the steps in the method embodiment shown in FIG. 6. The terminal embodiment corresponds to the foregoing terminal-side method embodiment. Each implementation process and implementation of the foregoing method embodiment may be applied to the terminal embodiment, and same technical effects can be achieved. Specifically, FIG. 6 is a schematic diagram of a hardware structure of a terminal for implementing an embodiment of this application.

The terminal 600 includes but is not limited to at least some components of a radio frequency unit 601, a network module 602, an audio output unit 603, an input unit 604, a sensor 605, a display unit 606, a user input unit 607, an interface unit 608, a memory 609, a processor 610, and the like.

A person skilled in the art may understand that the terminal 600 may further include a power supply (for example, a battery) that supplies power to each component. The power supply may be logically connected to the processor 610 by using a power management system, to implement functions such as charging management, discharging management, and power consumption management through the power management system. The structure of the terminal shown in FIG. 6 does not constitute a limitation on the terminal. The terminal may include more or fewer components than those shown in the figure, or combine some components, or have different component arrangements. Details are not described herein again.

It should be understood that in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 or another input device 6072. The touch panel 6071 is also referred to as a touchscreen. The touch panel 6071 may include two parts: a touch detection apparatus and a touch controller. The another input device 6072 may include but is not limited to a physical keyboard, a function key (such as a volume control key or an on/off key), a trackball, a mouse, and an operating lever. Details are not described herein again.

In this embodiment of this application, after receiving downlink data from a network-side device, the radio frequency unit 601 can transmit the downlink data to the processor 610 for processing. In addition, the radio frequency unit 601 can transmit uplink data to the network-side device. Generally, the radio frequency unit 601 includes but is not limited to an antenna, an amplifier, a transceiver, a coupler, a low-noise amplifier, a duplexer, and the like.

The memory 609 may be configured to store a software program or instructions and various types of data. The memory 609 may mainly include a first storage area for storing a program or instructions and a second storage area for storing data. The first storage area may store an operating system, an application program or instructions required by at least one function (for example, a sound play function or an image play function), and the like. In addition, the memory 609 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 may include one or more processing units. Optionally, the processor 610 integrates an application processor and a modem processor. The application processor mainly processes operations related to an operating system, a user interface, an application program, and the like. The modem processor, for example, a baseband processor, mainly processes a wireless communication signal. It can be understood that, the foregoing modem processor may not be integrated into the processor 610.

The radio frequency unit 601 is configured to transmit a first physical uplink shared channel PUSCH to a target cell in a random access channel-less RACH-less handover process.

There is an association relationship between a resource of the first PUSCH and a first reference signal of the target cell.

The processor 610 is configured to determine first information related to transmission of a first physical uplink shared channel PUSCH.

The radio frequency unit 601 is configured to transmit the first physical uplink shared channel PUSCH to a target cell in a random access channel-less RACH-less handover process based on the first information.

It may be understood that, for implementation processes of the implementations mentioned in this embodiment, refer to related descriptions in the method embodiment shown in FIG. 1 or FIG. 2, and same or corresponding technical effects are achieved. To avoid repetition, details are not described herein again.

An embodiment of this application further provides a network-side device, including a processor and a communication interface. The communication interface is coupled to the processor. The processor is configured to run a program or instructions to implement the steps in the method embodiment shown in FIG. 3 or FIG. 4. The network-side device embodiment corresponds to the foregoing network-side device method embodiment. Each implementation process and implementation of the foregoing method embodiment may be applied to the network-side device embodiment, and same technical effects can be achieved.

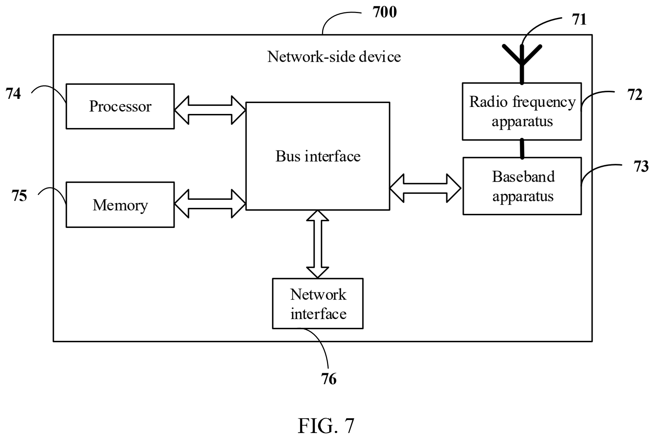

Specifically, an embodiment of this application further provides a network-side device. As shown in FIG. 7, the network-side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information through the antenna 71, and transmits the received information to the baseband apparatus 73 for processing. In a downlink direction, the baseband apparatus 73 processes to-be-transmitted information, and transmits processed information to the radio frequency apparatus 72. After processing the received information, the radio frequency apparatus 72 transmits processed information through the antenna 71.

The method performed by the network-side device in the foregoing embodiment may be implemented in the baseband apparatus 73. The baseband apparatus 73 includes a baseband processor.

For example, the baseband apparatus 73 may include at least one baseband board. A plurality of chips are disposed on the baseband board. As shown in FIG. 7, one of the chips is, for example, the baseband processor, and is connected to the memory 75 by using a bus interface, to invoke a program in the memory 75 to perform an operation of a network device shown in the foregoing method embodiment.

The network-side device may further include a network interface 76, and the interface is, for example, a common public radio interface (Common Public Radio Interface, CPRI).

Specifically, the network-side device 700 in this embodiment of the present invention further includes instructions or a program that is stored in the memory 75 and that is capable of running on the processor 74. The processor 74 invokes the instructions or the program in the memory 75 to perform the method performed by the shown modules of the first network device, and same technical effects are achieved. To avoid repetition, details are not described herein again.

An embodiment of this application further provides a readable storage medium. The readable storage medium stores a program or instructions. The program or the instructions are executed by a processor to implement processes in the embodiments of the transmission method, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface. The communication interface is coupled to the processor. The processor is configured to run a program or instructions to implement processes in the embodiments of the transmission method, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the embodiments of the transmission method, and same technical effects can be achieved. To avoid repetition, details are not described herein again.

An embodiment of this application further provides a communication system, including a terminal and a network-side device, where the terminal may be configured to perform the steps of the transmission method shown in FIG. 1, and the network-side device may be configured to perform the steps of the transmission method shown in FIG. 3.

An embodiment of this application further provides a communication system, including a terminal and a network-side device, where the terminal may be configured to perform the steps of the transmission method shown in FIG. 2, and the network-side device may be configured to perform the steps of the transmission method shown in FIG. 4.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A transmission method, comprising:

   transmitting, by a terminal, a first physical uplink shared channel PUSCH to a target cell in a random access channel-less RACH-less handover process, wherein
   there is an association relationship between a resource of the first PUSCH and a first reference signal of the target cell.

2. The method according to claim 1, wherein in a case that the first PUSCH is a configured grant physical uplink shared channel CG PUSCH, there is a mapping relationship between the resource of the first PUSCH and the first reference signal.

3. The method according to claim 2, wherein the first reference signal comprises at least one of the following: a first synchronization signal and PBCH block SSB and a first channel state information reference signal CSI-RS, wherein the first SSB comprises at least one of the following:

   a group of SSB among SSB in the target cell;
   an SSB configured by a network for RACH-less handover;
   an SSB that is in the target cell and that is configured by ssb-PositionsInBurst in a system information block SIB1;
   an SSB that is in the target cell and that is configured by ssb-PositionsInBurst in a serving cell common configuration information element ServingCellConfigCommon Information Element;
   a non-cell defining SSB that is configured in the target cell; and
   an SSB that is additionally configured in the target cell and that has an additional physical cell ID; or
   the first CSI-RS comprises at least one of the following:

      a group of CSI-RS among CSI-RS in the target cell; and
      a CSI-RS configured by a network for RACH-less handover.

4. The method according to claim 3, wherein the group of SSB among the SSB in the target cell is configured by the network or is predetermined, or the group of CSI-RS among the CSI-RS in the target cell is configured by the network or is predetermined.

5. The method according to any one of claims 2 to 4, wherein an association period between the resource of the first PUSCH and the first reference signal is determined based on at least one of the following:

   a configuration period of the first PUSCH;
   an association period table for a mapping relationship between a second SSB and a second CG PUSCH in configured grant based small data transmission CG SDT; and
   an association period table defined for RACH-less handover.

6. The method according to claim 1, wherein in a case that the first PUSCH is a dynamic grant physical uplink shared channel DG PUSCH, the association relationship between the resource of the first PUSCH and the first reference signal of the target cell is determined based on first downlink control information DCI.

7. The method according to claim 6, wherein

   a first field of the first DCI explicitly indicates the association relationship; or
   a second field of the first DCI implicitly indicates the association relationship.

8. The method according to claim 6 or 7, wherein
   the first reference signal comprises at least one of the following: a first synchronization signal and PBCH block SSB and a first channel state information reference signal CSI-RS.

9. The method according to any one of claims 1 to 8, wherein before the transmitting, by a terminal, a first physical uplink shared channel PUSCH to a target cell in a random access channel-less RACH-less handover process, the method further comprises:

determining, by the terminal, first information related to transmission of the first PUSCH; and
the transmitting, by a terminal, a first physical uplink shared channel PUSCH to a target cell in a random access channel-less RACH-less handover process comprises:
transmitting, by the terminal, the first PUSCH to the target cell in the random access channel-less RACH-less handover process based on the first information.

10. The method according to claim 9, wherein the first information comprises at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

11. A transmission method, comprising:

determining, by a terminal, first information related to transmission of a first physical uplink shared channel PUSCH; and
transmitting, by the terminal, the first physical uplink shared channel PUSCH to a target cell in a random access channel-less RACH-less handover process based on the first information.

12. The method according to claim 11, wherein the first information comprises at least one of the following:

a first timing advance TA for transmission of the first PUSCH;
a transmission occasion for transmission of the first PUSCH;
power control related information for transmission of the first PUSCH; and
a redundancy version RV for transmission of the first PUSCH.

13. The method according to claim 12, wherein in a case that the first information comprises the first TA for transmission of the first PUSCH, the determining, by a terminal, first information related to transmission of a first physical uplink shared channel PUSCH comprises at least one of the following:

determining a value of the first TA based on TA value-related information configured by a network; and
determining a TA value of a source cell as the value of the first TA based on first indication information transmitted from the network.

14. The method according to claim 13, wherein the TA value-related information configured by the network comprises at least one of the following:
a TA value, a common TA, a TA adjustment amount, satellite position information, a change rate of a satellite position, and a change rate of time.

15. The method according to any one of claims 13 and 14, wherein the TA value-related information configured by the network is indicated in any one of the following manners:

a handover command;
a physical downlink control channel PDCCH;
dedicated signaling of the terminal; and
a medium access control control element MAC-CE.

16. The method according to any one of claims 13 to 15, wherein the determining, by a terminal, first information related to transmission of a first physical uplink shared channel PUSCH further comprises determining validity of the first TA.

17. The method according to claim 16, wherein the determining validity of the first TA comprises:
determining the validity of the first TA based on at least one piece of the following information:

a validity period of a timer of the first TA, wherein the timer starts in a case that the terminal transmits the first PUSCH to the target cell for the first time in the RACH-less handover process;
whether a change in RSRP of one or more SSB meets a first preset threshold;
whether a reference signal associated with transmission of the first PUSCH is the same as a reference signal selected in the source cell;

whether a beam associated with transmission of the first PUSCH is the same as a beam selected in the source cell;

whether a change in RSRQ of a reference signal associated with PUSCH transmission relative to RSRQ of the reference signal selected in the source cell meets a second preset threshold;

whether a change in RSRP of the reference signal associated with PUSCH transmission relative to RSRP of the reference signal selected in the source cell meets a third preset threshold;

whether a difference between a path loss estimate of the source cell and a path loss estimate of the target cell meets a fourth preset threshold;

a position of an aerial platform corresponding to the source cell;

a position of an aerial platform corresponding to the target cell;

a position of the terminal; and

a common TA indicated by the network.

18. The method according to claim 17, wherein the path loss estimate of the source cell is estimated based on any one of the following reference signals:

a reference signal that is in the source cell and whose RSRQ or RSRP meets a fifth preset threshold; and

a reference signal that is in the source cell and that has maximum RSRQ or RSRP; or

the path loss estimate of the target cell is based on any one of the following reference signals:

a reference signal that is in the target cell and whose RSRQ or RSRP meets a sixth preset threshold;

a reference signal that is in the target cell and that has maximum RSRQ or RSRP; and

the reference signal associated with transmission of the first PUSCH.

19. The method according to claim 12, wherein in a case that the first information comprises the transmission occasion for transmission of the first PUSCH, the determining, by a terminal, first information related to transmission of a first physical uplink shared channel PUSCH comprises:

determining the transmission occasion of the first PUSCH based on second indication information transmitted from a network.

20. The method according to claim 19, wherein the second indication information is transmitted by using any one of the following signaling:

system information of the target cell;

system information of a source cell;

a handover command;

configured grant information of the first PUSCH; and

dynamic grant information of the first PUSCH.

21. The method according to claim 19 or 20, wherein the determining, by a terminal, first information related to transmission of a first physical uplink shared channel PUSCH further comprises:

determining validity of the transmission occasion of the first PUSCH.

22. The method according to claim 21, wherein the determining validity of the transmission occasion of the first PUSCH comprises:

determining the validity of the transmission occasion of the first PUSCH based on at least one piece of the following information:

whether the transmission occasion of the first PUSCH overlaps a valid RACH occasion;

whether the transmission occasion of the first PUSCH is a symbol that is available for uplink transmission and that is configured by a higher layer parameter tdd-UL-DL-ConfigurationCommon or tdd-UL-DL-ConfigurationDedicated, wherein the symbol available for uplink transmission comprises at least one of a flexible symbol flexible symbol and an uplink symbol UL symbol;

a quantity of symbols between the last symbol of transmission of a third SSB and the first symbol of the transmission occasion of the first PUSCH, wherein the third SSB is an SSB transmitted before the transmission occasion of the first PUSCH;

a quantity of symbols between the last symbol of first downlink transmission and the first symbol of the transmission occasion of the first PUSCH, wherein the first downlink transmission is downlink transmission before the transmission occasion of the first PUSCH;

a slot format indicator SFI indicated by DCI;

TA validity; and

whether overlapping occurs with other uplink transmission.

23. The method according to claim 12, wherein in a case that the first information comprises the power control related information for transmission the first PUSCH, the determining, by a terminal, first information related to transmission of a first physical uplink shared channel PUSCH comprises:

determining a path loss estimate in the target cell; and

determining an initial rated power of the first PUSCH of the terminal.

24. The method according to claim 23, wherein a reference signal used to determine the path loss estimate in the target cell comprises at least one of the following:

a reference signal associated with the first PUSCH;

a second reference signal in a source cell;

a reference signal indicated by a PDCCH that dynamically schedules a PUSCH; and

a reference signal indicated by a RACH-less handover command.

25. The method according to claim 24, wherein the second reference signal comprises at least one of the following:

a reference signal most recently selected by the terminal in the source cell;

a reference signal associated with a first PDCCH received by the terminal in the source cell, wherein the first PDCCH is used to schedule a RACH-less PUSCH; and

a reference signal associated with a handover command received by the terminal in the source cell.

26. The method according to claim 23, wherein the determining an initial rated power of the first PUSCH of the terminal comprises determining the initial rated power of the first PUSCH of the terminal based on at least one piece of the following information:

a target PRACH received power defined by the target cell;

a target PUSCH received power defined by the target cell;

a target PRACH received power defined by a source cell;

a target PUSCH received power defined by the source cell;

an initial rated power, of the first PUSCH, that is indicated by a handover command and that is used for RACH-less handover; and

an initial rated power, of the first PUSCH, that is indicated by DCI scheduling initial PUSCH transmission and that is used for RACH-less handover.

27. The method according to claim 12, wherein in a case that the first information comprises the redundancy version RV for transmission of the first PUSCH, the determining, by a terminal, first information related to transmission of a first physical uplink shared channel PUSCH comprises:

determining the redundancy version RV for transmission of the first PUSCH as a fixed value.

28. A transmission method, comprising:

receiving, by a first network device in a random access channel-less RACH-less handover process, a first physical uplink shared channel PUSCH transmitted by a terminal, wherein

there is an association relationship between a resource of the first PUSCH and a first reference signal of the first network device.

29. The method according to claim 28, wherein in a case that the first PUSCH is a configured grant physical uplink shared channel CG PUSCH, there is a mapping relationship between the resource of the first PUSCH and the first reference signal.

30. The method according to claim 29, wherein the first reference signal comprises at least one of the following: a first synchronization signal and PBCH block SSB and a first channel state information reference signal CSI-RS, wherein the first SSB comprises at least one of the following:

> a group of SSB among SSB in the first network device;
> an SSB configured by a network for RACH-less handover;
> an SSB that is of the first network device and that is configured by ssb-PositionsInBurst in a system information block SIB1;
> an SSB that is of the first network device and that is configured by ssb-PositionsInBurst in a serving cell common configuration information element ServingCellConfigCommon Information Element;
> a non-cell defining SSB that is configured in the first network device; and
> an SSB that is additionally configured in the first network device and that has an additional physical cell ID; or the first CSI-RS comprises at least one of the following:

>> a group of CSI-RS among CSI-RS in the first network device; and
>> a CSI-RS configured by a network for RACH-less handover.

31. The method according to claim 30, wherein the group of SSB among the SSB in the first network device is configured by the network or is predetermined, or the group of CSI-RS among the CSI-RS in the first network device is configured by the network or is predetermined.

32. The method according to any one of claims 29 to 31, wherein an association period between the resource of the first PUSCH and the first reference signal is determined based on at least one of the following:

> a configuration period of the first PUSCH;
> an association period table for a mapping relationship between a second SSB and a second CG PUSCH in configured grant based small data transmission CG SDT; and
> an association period table defined for RACH-less handover.

33. The method according to claim 28, wherein in a case that the first PUSCH is a dynamic grant physical uplink shared channel DG PUSCH, the association relationship between the resource of the first PUSCH and the first reference signal of the first network device is determined based on first downlink control information DCI.

34. The method according to claim 33, wherein

> a first field of the first DCI explicitly indicates the association relationship; or
> a second field of the first DCI implicitly indicates the association relationship.

35. The method according to claim 33 or 34, wherein
the first reference signal comprises at least one of the following: a first synchronization signal and PBCH block SSB and a first channel state information reference signal CSI-RS.

36. The method according to any one of claims 28 to 35, wherein the receiving, by a first network device in a random access channel-less RACH-less handover process, a first physical uplink shared channel PUSCH transmitted by a terminal comprises:

> receiving, by the first network device in the random access channel-less RACH-less handover process based on first information, the first physical uplink shared channel PUSCH transmitted by the terminal, wherein
> the first information is information related to transmission of the first PUSCH.

37. The method according to claim 36, wherein the first information comprises at least one of the following:

> a first timing advance TA for transmission of the first PUSCH;
> a transmission occasion for transmission of the first PUSCH;
> power control related information for transmission of the first PUSCH; and
> a redundancy version RV for transmission of the first PUSCH.

38. A transmission method, comprising:

receiving, by a first network device in a random access channel-less RACH-less handover process based on first information, a first physical uplink shared channel PUSCH transmitted by a terminal, wherein
the first information is information related to transmission of the first PUSCH.

39. The method according to claim 38, wherein the first information comprises at least one of the following:

   a first timing advance TA for transmission of the first PUSCH;
   a transmission occasion for transmission of the first PUSCH;
   power control related information for transmission of the first PUSCH; and
   a redundancy version RV for transmission of the first PUSCH.

40. The method according to claim 39, wherein in a case that the first information comprises the first TA for transmission of the first PUSCH, before the receiving a first physical uplink shared channel PUSCH transmitted by a terminal, the method further comprises at least one of the following:

   transmitting, by the first network device, TA value-related information to the terminal, wherein a value of the first TA is determined based on the TA value-related information; and
   transmitting, by the first network device, first indication information to the terminal, wherein the first indication information indicates the terminal to determine a TA value of a source cell as the value of the first TA.

41. The method according to claim 40, wherein the TA value-related information comprises at least one of the following:
   a TA value, a common TA, a TA adjustment amount, satellite position information, a change rate of a satellite position, and a change rate of time.

42. The method according to any one of claims 40 and 41, wherein the TA value-related information is indicated in any one of the following manners:

   a handover command;
   a physical downlink control channel PDCCH;
   dedicated signaling of the terminal; and
   a medium access control control element MAC-CE.

43. The method according to any one of claims 40 to 42, wherein validity of the first TA is determined based on at least one piece of the following information:

   a validity period of a timer of the first TA, wherein the timer starts in a case that the terminal transmits the first PUSCH in the target cell for the first time in the RACH-less handover process;
   whether a change in RSRP of one or more SSB meets a first preset threshold;
   whether a reference signal associated with transmission of the first PUSCH is the same as a reference signal selected in the source cell;
   whether a beam associated with transmission of the first PUSCH is the same as a beam selected in the source cell;
   whether a change in RSRQ of a reference signal associated with PUSCH transmission relative to RSRQ of the reference signal selected in the source cell meets a second preset threshold;
   whether a change in RSRP of the reference signal associated with PUSCH transmission relative to RSRP of the reference signal selected in the source cell meets a third preset threshold;
   whether a difference between a path loss estimate of the source cell and a path loss estimate of the target cell meets a fourth preset threshold;
   a position of an aerial platform corresponding to the source cell;
   a position of an aerial platform corresponding to the target cell;
   a position of the terminal; and
   a common TA indicated by a network.

44. The method according to claim 39, wherein in a case that the first information comprises the transmission occasion for transmission of the first PUSCH, before the receiving a first physical uplink shared channel PUSCH transmitted by a terminal, the method further comprises:
   transmitting, by the first network device, second indication information to the terminal, wherein the second indication information is used to determine a transmission occasion of the first PUSCH.

45. The method according to claim 39, wherein the transmission occasion for transmission of the first PUSCH is determined based on second indication information, and the second indication information is transmitted by using any one of the following signaling:

> system information of the first network device;
> system information of a source cell;
> a handover command;
> configured grant information of the first PUSCH; and
> dynamic grant information of the first PUSCH.

46. The method according to any one of claims 39, 44, and 45, wherein validity of the transmission occasion of the first PUSCH is determined based on at least one piece of the following information:

> whether the transmission occasion of the first PUSCH overlaps a valid RACH occasion;
> whether the transmission occasion of the first PUSCH is a symbol that is available for uplink transmission and that is configured by a higher layer parameter tdd-UL-DL-ConfigurationCommon or tdd-UL-DL-ConfigurationDedicated, wherein the symbol available for uplink transmission comprises at least one of a flexible symbol flexible symbol and an uplink symbol UL symbol;
> a quantity of symbols between the last symbol of transmission of a third SSB and the first symbol of the transmission occasion of the first PUSCH, wherein the third SSB is an SSB transmitted before the transmission occasion of the first PUSCH;
> a quantity of symbols between the last symbol of first downlink transmission and the first symbol of the transmission occasion of the first PUSCH, wherein the first downlink transmission is downlink transmission before the transmission occasion of the first PUSCH;
> a slot format indicator SFI indicated by DCI;
> TA validity; and
> whether overlapping occurs with other uplink transmission.

47. The method according to claim 39, wherein the power control related information for transmission of the first PUSCH comprises an initial rated power of the first PUSCH of the terminal; and
the initial rated power of the first PUSCH of the terminal is determined based on at least one piece of the following information:

> a target PRACH received power defined by the first network device;
> a target PUSCH received power defined by the first network device;
> a target PRACH received power defined by a source cell;
> a target PUSCH received power defined by the source cell;
> an initial rated power, of the first PUSCH, that is indicated by a handover command and that is used for RACH-less handover; and
> an initial rated power, of the first PUSCH, that is indicated by DCI scheduling initial PUSCH transmission and that is used for RACH-less handover.

48. The method according to claim 39, wherein the redundancy version RV for transmission of the first PUSCH is determined as a fixed value.

49. A terminal, comprising:

> a first transmission module, configured to transmit a first physical uplink shared channel PUSCH to a target cell in a random access channel-less RACH-less handover process, wherein
> there is an association relationship between a resource of the first PUSCH and a first reference signal of the target cell.

50. A terminal, comprising:

> a first determining module, configured to determine first information related to transmission of a first physical uplink shared channel PUSCH; and
> a second transmission module, configured to transmit the first physical uplink shared channel PUSCH to a target cell in a random access channel-less RACH-less handover process based on the first information.

**51.** A first network device, comprising:

a first receiving module, configured to receive, in a random access channel-less RACH-less handover process, a first physical uplink shared channel PUSCH transmitted by a terminal, wherein there is an association relationship between a resource of the first PUSCH and a first reference signal of the first network device.

**52.** A first network device, comprising:

a second receiving module, configured to receive, in a random access channel-less RACH-less handover process based on first information, a first physical uplink shared channel PUSCH transmitted by a terminal, wherein the first information is information related to transmission of the first PUSCH.

**53.** A terminal, comprising a processor and a memory, wherein the memory stores a program or instructions capable of running on the processor, and the program or the instructions are executed by the processor to implement the steps of the transmission method according to any one of claims 1 to 10, or the program or the instructions are executed by the processor to implement the steps of the transmission method according to any one of claims 11 to 27.

**54.** A network-side device, comprising a processor and a memory, wherein the memory stores a program or instructions capable of running on the processor, and the program or the instructions are executed by the processor to implement the steps of the transmission method according to any one of claims 28 to 37, or the program or the instructions are executed by the processor to implement the steps of the transmission method according to any one of claims 38 to 48.

**55.** A readable storage medium, wherein the readable storage medium stores a program or instructions, and the program or the instructions are executed by a processor to implement the transmission method according to any one of claims 1 to 10, or implement the steps of the transmission method according to any one of claims 11 to 27, or implement the steps of the transmission method according to any one of claims 28 to 37, or implement the steps of the transmission method according to any one of claims 38 to 48.

Start

A terminal transmits a first physical uplink shared channel PUSCH to a target cell in a random access channel-less RACH-less handover process — 101

End

FIG. 1

Start

A terminal determines first information related to transmission of a first physical uplink shared channel PUSCH — 201

The terminal transmits the first physical uplink shared channel PUSCH to a target cell in a random access channel-less RACH-less handover process based on the first information — 202

End

FIG. 2

Start

A first network device receives, in a random access channel-less RACH-less handover process, a first physical uplink shared channel PUSCH transmitted by a terminal — 301

End

FIG. 3

Start

A first network device receives, in a random access channel-less RACH-less handover process based on first information, a first physical uplink shared channel PUSCH transmitted by a terminal — 401

End

FIG. 4

500

Communication device

501 — Processor ⟺ Memory — 502

FIG. 5

600

| 601 | Radio frequency unit | | Network module | 602 |

610

| 609 | Memory<br>Application program<br>Operating system | | Audio output unit | 603 |

| 608 | Interface unit | Processor | Input unit<br>Graphics<br>processing unit | 604<br>6041 |
| | | | Microphone | 6042 |

| 607 | User input unit | | Display unit | 606 |
| 6071 | Touch panel | | Display panel | 6061 |
| 6072 | Another input device | | | |

Sensor   605

FIG. 6

FIG. 7

## INTERNATIONAL SEARCH REPORT

| International application No. |
| --- |
| **PCT/CN2024/091305** |

**A.      CLASSIFICATION OF SUBJECT MATTER**

H04W 36/00(2009.01)i

According to International Patent Classification (IPC) or to both national classification and IPC

**B.      FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; EPTXT; WOTXT; 3GPP: 参考信号, 对应, 关联, 映射, 切换, 跳过, 无, 随机接入, 上行共享信道, 功率, 定时提前量, 传输时机, rach-less, handover, mapping, corresponding, PUSCH, CSI-RS, SSB, power, TA, RV, PO

**C.      DOCUMENTS CONSIDERED TO BE RELEVANT**

| Category* | Citation of document, with indication, where appropriate, of the relevant passages | Relevant to claim No. |
| --- | --- | --- |
| X | US 2021051672 A1 (COMCAST CABLE COMMUNICATIONS, LLC) 18 February 2021 (2021-02-18) <br> description, paragraphs [0203]-[0389] | 1-55 |
| X | US 2021051707 A1 (COMCAST CABLE COMMUNICATIONS, LLC) 18 February 2021 (2021-02-18) <br> description, paragraphs [0182]-[0279] | 1-55 |
| A | CN 115942383 A (FG INNOVATION CO., LTD.) 07 April 2023 (2023-04-07) <br> entire document | 1-55 |
| A | WO 2018093939 A1 (INTEL IP CORP.) 24 May 2018 (2018-05-24) <br> entire document | 1-55 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 June 2024** | **03 July 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091305**

| Patent document cited in search report | | | Publication date (day/month/year) | Patent family member(s) | | | Publication date (day/month/year) |
|---|---|---|---|---|---|---|---|
| US | 2021051672 | A1 | 18 February 2021 | EP | 3780856 | A1 | 17 February 2021 |
| | | | | CA | 3090242 | A1 | 14 February 2021 |
| US | 2021051707 | A1 | 18 February 2021 | EP | 3780871 | A1 | 17 February 2021 |
| | | | | CA | 3090159 | A1 | 16 February 2021 |
| | | | | US | 2023069881 | A1 | 09 March 2023 |
| | | | | US | 11483859 | B2 | 25 October 2022 |
| CN | 115942383 | A | 07 April 2023 | US | 2023103863 | A1 | 06 April 2023 |
| | | | | EP | 4161200 | A1 | 05 April 2023 |
| WO | 2018093939 | A1 | 24 May 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310540601